# EUROPÄISCHE PATENTSCHRIFT

(11) **EP 2 679 859 B1**
(45) Veröffentlichungstag und Bekanntmachung des Hinweises auf die Patenterteilung: **24.05.2023**
(21) Anmeldenummer: 13003225.3
(22) Anmeldetag: 25.06.2013
(51) Int. Cl.: F16F 9/34, F16F 9/53, B62K 25/04

(54) **Stoßdämpfer und Verfahren zum Betreiben eines Stoßdämpfers insbesondere für ein Fahrrad**
Shock absorber and method for operating a shock absorber, in particular for a bicycle
Amortisseur et procédé de fonctionnement d'un amortisseur, notamment pour une bicyclette

(30) Priorität: 26.06.2012 DE 102012012532
(43) Veröffentlichungstag der Anmeldung: 01.01.2014
(73) Patentinhaber: DT Swiss AG, 2504 Biel (CH)
(72) Erfinder: Battlogg, Stefan, A-6771 St. Anton i.M. (AT); Pösel, Jürgen, A-6700 Bludenz (AT); Elsensohn, Gernot, A-6771 St. Anton i.M. (AT); Walthert, Martin, CH-3270 Aarberg (CH)
(74) Vertreter: BSB Patentanwälte Schütte & Engelen Partnerschaft mbB

(56) Entgegenhaltungen:
- EP-A2- 2 036 746
- US-A1- 2004 195 062
- US-A1- 2011 127 706

## Beschreibung

Die vorliegende Erfindung betrifft einen Stoßdämpfer für ein wenigstens teilweise muskelbetriebenes Fahrzeug und insbesondere ein Fahrrad. Das Fahrrad kann mit einem Hilfsantrieb und insbesondere einem elektrischen Hilfsantrieb ausgerüstet sein.

Die EP 2 036 746 A2 offenbart einen Stoßdämpfer für ein Kraftfahrzeug mit einem hohlen Zylinder und einem darin angeordneten Kolben und einem Kolbenventil und einem Sensormodul. Die Dämpfung erfolgt in Abhängigkeit von einer Position des Stoßdämpfers.

Mit der US 2004/0195062 A1 ist ein magnetorheologischer Dämpfer mit einem Vorratsbehälter bekannt geworden, der an Armeefahrzeugen eingesetzt wird und der in Verbindung mit dem Dämpfer steht. Die Dämpfung erfolgt in Abhängigkeit von einer Geschwindigkeit des Dämpfers. Bei der Einstellung des Magnetfeldes wird eine Temperatur des Dämpfersystems berücksichtigt.

Im Stand der Technik sind verschiedenste Hinterraddämpfer und Federgabeln für Fahrräder bekannt geworden. Typischerweise umfasst ein Stoßdämpfer eine Federeinheit, um auftretende Stöße abzufedern und eine Dämpfungseinheit, um die Federschwingung zu dämpfen. Bei Hinterradstoßdämpfern werden die Federeinheit und die Dämpfungseinheit in der Regel als integrale Einheit ausgebildet. Bei Federgabeln können die Dämpfungseinheit und die Federeinheit auch separat angeordnet werden.

Dämpfer für Fahrräder werden zumeist mit Öl als Dämpfungsfluid betrieben. Zur Dämpfung wird das Dämpfungsfluid von einer ersten Dämpfungskammer über eine Blende gedrosselt zu einer zweiten Dämpfungskammer geleitet. Die Größe der Öffnung der Blende bestimmt die Stärke der Dämpfung. Die optimale Dämpfung hängt von verschiedenen Faktoren ab, wie beispielsweise dem Gewicht des Fahrers und insbesondere den Eigenschaften des Geländes. Es ist wünschenswert, die Stärke der Dämpfung lastabhängig einzustellen, sodass kleine Stöße weniger stark gedämpft werden als starke Stöße. Bei Fahrten über eine Straße, über einen Waldweg oder direkt durch das Gelände sind deshalb unterschiedliche Dämpfungseinstellungen optimal.

Zur Einstellung und Beeinflussung der Dämpfung sind magnetorheologische und elektrorheologische Fluide bekannt geworden, deren Eigenschaften durch Anlegen eines entsprechenden magnetischen oder elektrischen Feldes beeinflusst werden können.

Magnetorheologische Fluide bestehen meistens aus einer Suspension von kleinen, magnetisch polarisierbaren Partikeln, welche in einer Trägerflüssigkeit wie einem Öl fein verteilt sind. Die meist aus Carbonyleisenpulver bestehenden polarisierbaren Partikel weisen typischerweise Durchmesser zwischen etwa 0,1 und 50 Mikrometern auf und bilden unter Einfluss eines magnetischen Feldes kettenartige Strukturen, die eine vom Feld abhängige Schubspannung aufnehmen können. Dadurch kann, ähnlich wie durch eine Viskositätsänderung beispielsweise der Strömungswiderstand eines Ventils verändert werden. Der Vorgang ist schnell und reversibel, sodass sich bei Abschaltung des Magnetfelds der rheologische Ausgangszustand wieder einstellt. Somit eignen sich magnetorheologische Fluide zum Einsatz an Dämpfern von Fahrrädern.

Mit der DE 698 21 799 T2 ist ein Hinterradstoßdämpfer für Fahrräder bekannt geworden, der über ein magnetorheologisches Fluid gedämpft wird. An einem Ende einer Dämpferkammer wird über eine Bohrung eine Verbindung nach außen zu einem externen Dämpfungsventil zur Verfügung gestellt, das mit einer externen und parallel angeordneten Einheit verbunden ist, in dem die zweite Dämpferkammer untergebracht ist. An dem Dämpfungsventil ist ein Dauermagnet vorgesehen, dessen Position relativ zu dem Durchflussspalt veränderbar ist, um die Stärke des Magnetfeldes in dem Durchflussspalt einzustellen. Nachteilig an einem solchen System ist der komplexe Aufbau, der eine separat und parallel angeordnete Dämpferkammer erfordert, was den konstruktiven Aufwand und den Montageaufwand und das Gewicht des Hinterradstoßdämpfers erhöht.

Ein genereller Nachteil bei Stoßdämpfern, die mit elektrorheologischen oder magnetorheologischen Fluiden betrieben werden, ist, dass bei der Dämpfung von Stößen immer erst eine Losbrechkraft überwunden werden muss, bevor ein Durchfluss durch das magnetorheologische Dämpferventil stattfindet. Das liegt daran, dass beispielsweise die magnetorheologischen Partikel sich entlang der Feldlinien relativ fest miteinander verketten. Erst beim Überwinden der Losbrechkraft ist ein Durchströmen eines Dämpfungskanals möglich. Bei bekannten magnetorheologischen Dämpfern wird eine bestimmte und einstellbare Dämpfungskraft eingestellt. Das hat aber den Nachteil, dass das Ansprechverhalten ungünstig ist, da erst eine Reaktion des Stoßdämpfers erfolgt, wenn die Losbrechkraft überwunden wurde. Bei einer weichen Einstellung des Stoßdämpfers wird die Losbrechkraft relativ schnell überwunden und bei einer harten Einstellung des Stoßdämpfers wird die Losbrechkraft erst bei großen Kräften überwunden. Der Stoßdämpfer spricht in beiden Fällen aber erst bei der Überwindung der jeweiligen Losbrechkraft an.

Mit der EP 2 278 185 A1 ist ein magnetorheologischer Hinterradstoßdämpfer für ein Fahrrad bekannt geworden, bei dem die Stärke des im Dämpfungskanal wirkenden Magnetfeldes mechanisch über einen Drehring eingestellt wird. Es kann die Dämpfung in der Druckstufe und in der Zugstufe eingestellt werden. Der Stoßdämpfer bietet ein angenehmes Ansprechverhalten, da über einen einstellbaren Anteil des Dämpfungskanals, der dem Magnetfeld ausgesetzt ist, ein Nulldurchgang im Kraft-Geschwindigkeits-Diagramm gewährleistet wird. Ein weiterer Vorteil eines solches Systems ist, dass für den Betrieb keine elektrische Energie benötigt wird. Eine flexible oder elektronische Einstellung der Veränderung Dämpfereigenschaften ist aber schwierig.

Mit der WO 2010/007433 A2 ist ein Stoßdämpfer für Fahrräder bekannt geworden, bei dem die Druckstufendämpfung durch ein magnetorheologisches Ventil beeinflusst wird. Ein Beschleunigungssensor detektiert in vorbestimmten Zeitabständen den Beschleunigungswert und schaltet die elektrische Spule ein, um den Durchfluss durch das Dämpfungsventil zu dämpfen, wenn ein Beschleunigungswert eine vorgegebene Schwelle überschreitet. Dieser Stoßdämpfer und das damit durchgeführte Verfahren bewirkt die Dämpfung von Stößen und unterbindet beim sogenannten Wiegetritt die Wippbewegung durch das periodische Einfedern des Dämpfers (eng.: "pedal bob"). Weiterhin können bei dem bekannten Dämpfer für bestimmte Zeiträume die Beschleunigungswerte erfasst werden, um den Typ des Geländes, auf dem der Fahrer fährt, automatisch zu bestimmen. Durch die Anzahl und Größe der Beschleunigungswerte kann beispielsweise festgestellt werden, ob der Fahrer über glatten Asphalt oder aber durch das Gelände fährt. Entsprechend der historischen Daten kann die Dämpfung entsprechend angepasst werden, sodass auf einer glatten Straße die Dämpfung hart eingestellt wird, während im Gelände eine weiche Dämpfung vorgezogen wird.

Ein solcher Dämpfer funktioniert grundsätzlich. Nachteilig ist allerdings, dass beim Fahren auf glatter Straße die Dämpfung hart eingestellt wird, sodass beim Überfahren eines Schlagloches oder dergleichen praktisch keine Dämpfung erfolgt und der Schlag praktisch ungedämpft weiter gegeben wird. Beim Fahren im Wiegetritt wird mit dem Stoßdämpfer zwar das periodische Einfedern des Dämpfers verhindert, aber Stöße werden auch nicht mehr gedämpft. Ein Nulldurchgang des Kraft-Geschwindigkeits-Diagramms liegt bei aktivierter Dämpfung auch nicht vor, da erst die Losbrechkraft der MRF-Partikel überwunden werden muss, bevor eine Dämpfung stattfindet. Ein weiterer Nachteil ist, dass bei Straßenfahrten viel elektrische Energie benötigt wird, um die dort geforderte harte Dämpfung einzustellen. Das wirkt sich nachteilig auf die Reichweite aus oder es müssen größere Batterien oder Akkus eingesetzt werden, was das Gewicht erhöht. Eine Gewichtserhöhung ist aber unerwünscht.

Es sind auch Ideen bekannt geworden, GPS-Sensoren oder dergleichen einzusetzen, um elektrisch steuerbare Stoßdämpfer positionsabhängig einzustellen. Über ein GPS-Signal kann der Stoßdämpfer beispielsweise auf die Einstellung "Straße" und somit hart eingestellt werden während der Dämpfer weicher eingestellt wird, wenn eine Fahrt durch das Gelände erfolgt. Nachteilig bei solchen Systemen ist aber, dass trotz der relativ hohen Genauigkeit von GPS-Signalen es gerade auf Wirtschafts-, Wald- oder Wanderwegen einen erheblichen Unterschied machen kann, ob das Fahrrad 50 cm oder auch nur 10 cm oder sogar 1 cm weiter rechts oder links fährt. Deshalb kann es trotz satellitengestützter Positionsbestimmung und bei Hinterlegung eines entsprechenden Kartenmaterials dennoch zu ungeeigneten Einstellungen des Stoßdämpfers kommen.

Es sind auch Überlegungen angestellt worden, die Belastungen eines Stoßdämpfers beispielsweise beim Fahren von Runden aufzuzeichnen und den Stoßdämpfer beim Fahren der nächsten Runde entsprechend der zuvor aufgezeichneten Werte einzustellen, um günstige Dämpfungseigenschaften bereitzustellen. Nachteilig daran ist allerdings ebenfalls, dass bei einer zweiten Runde nicht exakt der gleiche Weg gefahren werden wird wie bei der ersten Runde. Schon eine Abweichung von einem oder mehreren Zentimetern kann den Unterschied ausmachen, ob eine Wurzel überfahren oder umfahren wird. Außerdem können schon geringe seitliche Abweichungen erhebliche Untergrundänderungen hervorrufen, sodass auch beim Zugriff auf Daten zuvor gefahrener Runden erhebliche Abweichungen der tatsächlich auf den Stoßdämpfer einwirkenden Belastungen vorliegen können.

Grundsätzlich sind zwar in neuester Zeit beispielsweise für Kraftfahrzeuge optische Erkennungssysteme bekannt geworden, mit denen eine Nahfelderkennung des Untergrundes vor dem Fahrzeug stattfinden kann. Dazu wird über Laserdioden oder dergleichen eine Radarerfassung des Geländes vor dem Fahrzeug vorgenommen und es wird praktisch eine dreidimensionale Erfassung des Geländes vor dem Fahrzeug vorgenommen. Das funktioniert beispielsweise für Fahrkraftzeuge bei der frühzeitigen Erkennung von Kurven, wo dementsprechend die verschiedenen Stoßdämpfer des Fahrzeugs schon im Voraus unterschiedlich eingestellt werden, um optimale Fahrbedingungen in der Kurve zu erhalten. Ob solche Systeme heute schon für den Einsatz an einem Fahrrad und zur Erkennung des Untergrundes bei Bergabfahrten geeignet wären, kann dahingestellt bleiben, da jedenfalls für eine derartige Erkennung ein ganz erheblicher Rechenaufwand erforderlich ist, der Rechenzeit benötigt. Tatsächlich kann mit solchen Untergrunderkennungssystemen auch immer nur ein digitales Umschalten erreicht werden. Entweder ist der Dämpfer durch das Magnetfeld hart oder aber weich eingestellt. Wenn ein Magnetfeld wirkt, weist der Stoßdämpfer keinen Nulldurchgang im Kraft-Geschwindigkeits-Diagramm mehr auf, sodass das Ansprechverhalten nicht mehr so gut ist. Eine Beaufschlagung des Dämpfungskanals mit einem stark inhomogen Magnetfeld, wie in der EP 2 278 185 A1 kann zwar ein angenehmes Ansprechverhalten zur Verfügung stellen, aber eine Variation eines solchen inhomogen Magnetfeldes ist nicht einfach zu erreichen.

Bei konventionellen Stoßdämpfern liegt hingegen auch bei einer härteren Grundeinstellung des Stoßdämpfers ein Nulldurchgang im Kraft-Geschwindigkeits-Diagramm vor, der jederzeit zu einem angenehmen Ansprechverhalten führt. Erst die Aktivierung eines Lockouts blockiert einen konventionellen Stoßdämpfer, aber damit wird der Stoßdämpfer ja praktisch bewusst abgeschaltet.

Es ist deshalb die Aufgabe der vorliegenden Erfindung, einen Stoßdämpfer zur Verfügung zu stellen, womit eine flexible Steuerung möglich ist und womit ein weiches Ansprechverhalten bei unterschiedlichen Belastungen ermöglicht wird.

Diese Aufgabe wird gelöst durch einen Stoßdämpfer für ein wenigstens teilweise muskelbetriebenes Fahrrad mit den Merkmalen des Anspruchs 1. Bevorzugte Weiterbildungen der Erfindung sind Gegenstand der Unteransprüche. Weitere Vorteile und Merkmale der Erfindung ergeben sich aus der allgemeinen Beschreibung und der Beschreibung des Ausführungsbeispiels.

Offenbart wird auch ein Verfahren zum Betreiben wenigstens eines erfindungsgemäßen Stoßdämpfers für ein wenigstens teilweise muskelbetriebenes Fahrzeug und insbesondere Fahrrad, bei dem wenigstens eine Relativbewegung einer ersten und einer zweiten über eine Dämpfereinrichtung miteinander verbundenen Komponente gedämpft wird. Dabei umfasst die Dämpfereinrichtung wenigstens ein steuerbares Dämpfungsventil mit wenigstens einer Felderzeugungseinrichtung und insbesondere einer elektrischen Spuleneinrichtung, mit der ein feldempfindliches Medium beeinflussbar ist, um eine Dämpfungskraft der Dämpfungseinrichtung durch Erzeugen einer Feldstärke der Felderzeugungseinrichtung und insbesondere durch Erzeugen einer Feldstärke durch Anlegen einer Stromstärke an wenigstens eine elektrische Spuleneinrichtung zu beeinflussen. Eine Dämpferkennlinie wird eingestellt und/oder ausgewählt. Insbesondere zur Ereigniserkennung wird wenigstens ein Kennwert für die aktuelle Relativgeschwindigkeit der ersten und der zweiten Komponente zueinander periodisch in Echtzeit ermittelt. Mit dem Kennwert wird zur Dämpfung aus einer Dämpferkennlinie ein Maß für eine einzustellende Feldstärke oder eine einzustellende Feldstärke in Echtzeit abgeleitet. Mit der Felderzeugungseinrichtung wird in Echtzeit die aktuell einzustellende Feldstärke erzeugt, um eine Dämpfungskraft in Echtzeit einzustellen, die sich aus der vorbestimmten Dämpferkennlinie bei dem ermittelten Kennwert ergibt. Eine Regelgeschwindigkeit ist schneller als 50 ms.

Das Verfahren hat viele Vorteile. Ein erheblicher Vorteil des Verfahrens besteht darin, dass wenigstens ein Kennwert für eine aktuelle Relativgeschwindigkeit der ersten und der zweiten Komponente zueinander ermittelt wird. Mithilfe einer Dämpferkennlinie wird eine aktuelle einzustellende Feldstärke abgeleitet und eingestellt, sodass insgesamt in Echtzeit die zu der Relativgeschwindigkeit gehörende Dämpfungskraft an der Dämpfereinrichtung eingestellt wird. Dabei bedeutet der Begriff "in Echtzeit", dass das gesamte System die auftretenden Echtzeitanforderungen erfüllt. Daraus folgt, dass das System schnell genug Daten erfasst, auswertet und eine entsprechende Feldstärke schnell genug an die Felderzeugungseinheit weitergibt und sich daraus schnell genug eine Kraftänderung einstellt, um auf das aufgetretene Ereignis angemessen zu reagieren.

Dabei wird jeweils die aktuelle Relativgeschwindigkeit ermittelt und nicht beispielsweise ein Durchschnittswert über eine Minute oder mehr, um eine automatische Geländerkennung durchzuführen. Hier wird ein Kennwert für die jeweils aktuelle Relativgeschwindigkeit ermittelt. Dabei wird der Verlauf der Relativgeschwindigkeit über der Zeit während eines einzigen Stoßes zeitlich ausreichend fein aufgelöst, um zu jedem Zeitpunkt des Stoßes eine angemessene Dämpfungskraft bereitzustellen.

Ein erheblicher Vorteil gegenüber dem Stand der Technik ist, dass ein aufgetretenes Ereignis, wie beispielsweise ein Stoß oder eine Wippbewegung oder eine sonstige Störung oder dergleichen, in Echtzeit erkannt und darauf reagiert wird.

Das bedeutet, dass im Normalzustand ohne Ereignisse von z. B. Störungen beispielsweise kein Feld an der Felderzeugungseinrichtung anliegt, da ohne Störung auch keine Relativgeschwindigkeit zwischen der ersten und der zweiten Komponente auftritt. Daraus ergibt sich direkt, dass elektrische Energie zum Betreiben des Dämpfungsventils höchstens dann benötigt wird, wenn Ereignisse in Form von Stößen oder Schwingungen oder dergleichen auftreten.

Ganz genau bedeutet dies, dass beispielsweise beim Fahren im Wiegetritt ein Feld nur an den kurzen Zeitpunkten angelegt wird, an denen eine Relativbewegung erfolgt, sodass die Spule als Felderzeugungseinrichtung zu wenigstens ca. 50% der Zeit stromlos bleiben kann, was eine erhebliche Menge an elektrischer Energie einsparen kann. Die geringere Einspeisung von elektrischer Energie reduziert auch den Wärmeeintrag.

Auch bei der Fahrt durch Gelände wird die Spule nur bestromt, wenn eine entsprechende aktuelle Relativgeschwindigkeit vorliegt. Tatsächlich wird nicht einmal bei jedem Ereignis elektrische Energie zur Dämpfung benötigt, da der Dämpfer auch ohne Strom mit der dem Stoßdämpfer eigenen Grunddämpfung auftretende Stöße etc. dämpft. Elektrische Energie muss nur eingesetzt werden, wenn eine darüber hinaus gehende Dämpfung erfolgen soll.

Die beispielsweise in einem (Daten-) Speicher der Dämpfereinrichtung hinterlegte Dämpferkennlinie definiert eine Abhängigkeit der Dämpfungskraft von der Relativgeschwindigkeit der beiden Komponenten zueinander. Die Dämpfungskraft ergibt sich durch Anlegen einer entsprechenden Feldstärke mit der Felderzeugungseinrichtung, sodass die Dämpferkennlinie auch die Abhängigkeit der Feldstärke von der Relativgeschwindigkeit festlegt. Die Feldstärke ergibt sich wiederum aus der Stromstärke, die an die elektrische Spuleneinrichtung als Felderzeugungseinrichtung angelegt wird. Damit definiert die Dämpferkennlinie auch den insbesondere nicht-linearen Zusammenhang zwischen der Relativgeschwindigkeit und der Stromstärke der Spuleneinrichtung.

Vorzugsweise wird das Verfahren mit einem Stoßdämpfer durchgeführt, der über ein magnetorheologisches Fluid gedämpft wird. Vorzugsweise wird wenigstens eine elektrische Spuleneinrichtung als Felderzeugungseinrichtung eingesetzt.

In einer weiteren Ausgestaltungdient das Verfahren zum Betreiben wenigstens eines Stoßdämpfers für ein wenigstens teilweise muskelbetriebenes Fahrzeug und insbesondere ein Fahrrad, bei dem wenigstens eine Relativbewegung einer ersten und einer zweiten über eine Dämpfereinrichtung miteinander verbundenen Komponente gedämpft wird. Dabei umfasst die Dämpfereinrichtung wenigstens ein steuerbares Dämpfungsventil mit wenigstens einer Felderzeugungseinrichtung und insbesondere einer elektrischen Spuleneinrichtung, mit der ein feldempfindliches Medium beeinflussbar ist, um eine Dämpfungskraft der Dämpfungseinrichtung durch Erzeugen einer Feldstärke der Felderzeugungseinrichtung und insbesondere durch Erzeugen einer Feldstärke durch Anlegen einer Stromstärke an wenigstens eine elektrische Spuleneinrichtung zu beeinflussen. Dabei ist eine Steuereinrichtung zur Steuerung vorgesehen. Ein Steuerkreislauf wird periodisch gesteuert durchlaufen. Dabei wird in dem Steuerkreislauf wenigstens ein aktueller Kennwert für die aktuelle Relativgeschwindigkeit der ersten und der zweiten Komponente zueinander periodisch ermittelt. In dem Steuerkreislauf wird mit dem aktuellen Kennwert aus einer vorbestimmten Dämpferkennlinie eine aktuelle Stromstärke der Felderzeugungseinrichtung abgeleitet. Danach wird in dem Steuerkreislauf die Felderzeugungseinrichtung mit der aktuellen Stromstärke beaufschlagt. Dadurch wird beim Durchlaufen des Steuerkreislaufs eine Dämpfungskraft in Echtzeit eingestellt, die sich aus der vorbestimmten Dämpferkennlinie bei dem ermittelten aktuellen Kennwert ergibt.

Die in dieser Anmeldung beschriebenen Ausführungsbeispiele von Stoßdämpfern können grundsätzlich aber auch mit elektrorheologischen Fluiden als feldempfindlichen Fluiden ausgerüstet sein. Dementsprechend wird bei solchen Stoßdämpfern ein elektrisches Feld angelegt.

Unter einer Dämpferkennlinie im Sinne der vorliegenden Anmeldung kann eine funktionale Beziehung verstanden werden, die die Relativgeschwindigkeit bzw. den Kennwert mit einer Dämpfungskraft über eine Berechnungsvorschrift verknüpft. Unter einer Dämpferkennlinie wird aber auch ein Kennfeld verstanden, welches in entsprechender Weise abgefragt werden kann. Dabei kann auf die enthaltenen Stützstellen direkt zugegriffen werden oder es wird über ein Interpolations- oder Extrapolationsverfahren aus einem gegebenen Kennwert eine entsprechende Dämpfungskraft abgeleitet. In entsprechender Weise können die Dämpfungskraft mit einer zu erzeugenden Feldstärke und die Feldstärke mit einer einzustellenden Stromstärke verknüpft sein.

Die erste und die zweite Komponente können beliebige Komponenten des Stoßdämpfers oder beispielsweise des Fahrrades sein, an dem der Stoßdämpfer montiert ist. So können die Komponenten die gegenüberliegenden Dämpferenden sein. Es ist auch möglich, dass unter der ersten und der zweiten Komponente Anschlusselemente oder beispielsweise das Standrohr und das Tauchrohr einer Federgabel verstanden werden.

Vereinfacht gesagt dient das Verfahren zum Betreiben eines Stoßdämpfers, bei dem eine Relativbewegung einer ersten und einer zweiten über eine Dämpfereinrichtung miteinander verbundenen (Fahrzeug-) Komponente erfasst wird und bei dem in Abhängigkeit von einem ermittelten Maß der aktuellen Relativbewegung eine Felderzeugungseinrichtung entsprechend einer vorbestimmten Dämpferkennlinie oder Feldkurve eingestellt wird.

Dabei wird die aktuelle Geschwindigkeit der Relativbewegung zwischen der ersten und der zweiten Komponente zueinander periodisch bestimmt und es wird in Abhängigkeit von dem Maß der aktuellen Geschwindigkeit der Relativbewegung das aktuelle Feld der Felderzeugungseinrichtung entsprechend einer vorbestimmten Feldkurve bzw. Dämpferkennlinie eingestellt. In einfachen Fällen ergibt sich bei festen oder doch im Wesentlichen festen Zeitabständen zwischen einzelnen Messungen ein Kennwert für die aktuelle Relativgeschwindigkeit direkt aus der erfassten Relativbewegung.

Im Unterschied zum Stand der Technik wird hier nicht eine Dämpferkennlinie mechanisch vorgegeben, sondern die Dämpferkennlinie wird dynamisch erzeugt. Eine vorgegebene Dämpferkennlinie wird durch Einstellung der entsprechenden Feldstärken bzw. Stromstärken jederzeit bei Bedarf nachgebildet. Das bedeutet, dass zunächst eine Dämpferkennlinie vorgegeben oder ausgewählt wird. Anschliessend wird zu jeder auftretenden Relativgeschwindigkeit die zugehörige Dämpfungskraft ermittelt und über Einstellung einer entsprechenden Stromstärke auch eingestellt. Das geht so schnell, dass das System echtzeitfähig ist. Auf alle auftretenden Ereignisse und Stöße wird so schnell reagiert, dass sich der Stoßdämpfer so verhält, als wenn die vorgegebene Dämpferkennlinie in dem Stoßdämpfer mechanisch realisiert wäre. Der Unterschied zu einem rein mechanisch aufgebauten Stoßdämpfer besteht aber darin, dass beliebige Dämpferkennlinien vorgegeben und ausgewählt werden können. Eine mechanische Änderung der Einstellungen an dem Stoßdämpfer ist dazu nicht nötig. Es können sogar zwei Dämpferkennlinien nacheinander eingestellt werden, deren Realisierung bei konventionellen rein mechanisch eingestellten Stoßdämpfern nicht möglich wäre, wenn sie z. B. widersprüchliche mechanische Eigenschaften voraussetzen. Dadurch wird eine enorme Flexibilität erreicht.

Es ist besonders bevorzugt, dass die Dämpfungskraft mit zunehmender Relativgeschwindigkeit erhöht wird. Besonders bevorzugt ist es auch, dass die Dämpfungskraft mit zunehmender Feldstärke und insbesondere mit zunehmender Stromstärke der Felderzeugungseinrichtung zunimmt. Eine solche Ausgestaltung ermöglicht eine besonders energiesparende Betriebsweise, da ein Feld der Felderzeugungseinrichtung nur benötigt wird, wenn eine entsprechende Dämpfungskraft benötigt wird. Im Normalzustand, wenn keine Relativbewegung zwischen der ersten und der zweiten Komponente erfolgt, wird demzufolge auch keine Feldstärke und somit auch keine elektrische Energie benötigt. Das ermöglicht einen energiesparenden Betrieb, wenn beispielsweise auf einer glatten Straße mit hoher Trittfrequenz gefahren wird, da bei solchen Bedingungen in der Regel kaum oder keine Stöße auf den Stoßdämpfer auftreten. Auch Wippbewegungen treten bei einer hohen Trittfrequenz in der Regel nur in einem geringen Maße oder gar nicht auf.

Besonders bevorzugt weist die Dämpferkennlinie im Bereich geringer positiver und/oder negativer Relativgeschwindigkeiten einen Verlauf auf, der durch jeweils eine Gerade mit einer vorbestimmten Low-Speed-Steigung angenähert oder beschrieben werden kann. Besonders bevorzugt ist die Dämpferkennlinie im Bereich geringer positiver und/oder negativer Relativgeschwindigkeiten im Wesentlichen linear ausgebildet. Dabei kann die Steigung im Bereich der positiven und der negativen Relativgeschwindigkeiten unterschiedlich sein.

Besonders bevorzugt ist es ebenso, dass die Dämpferkennlinie im Bereich großer positiver und/oder negativer Relativgeschwindigkeiten jeweils durch eine Gerade mit einer vorbestimmten High-Speed-Steigung angenähert oder beschrieben werden kann. Vorzugsweise ist die Dämpferkennlinie im Bereich großer Relativgeschwindigkeiten wenigstens im Wesentlichen linear. Auch hier kann die Steigung für die Zugstufe und die Druckstufe unterschiedlich sein.

In mittleren Bereichen der positiven und/oder negativen Relativgeschwindigkeiten kann wenigstens ein linearer oder gekrümmter Übergangsbereich vorgesehen sein, in dem ein nichtlinearer Verlauf der Dämpfungskraft bzw. Feldstärke über der Relativgeschwindigkeit vorgesehen ist.

Die Dämpferkennlinie stellt in jedem Fall die Steuerungsgrundlage für den Stoßdämpfer dar. Nach dem Erfassen eines Kennwertes bzw. der aktuellen Relativgeschwindigkeit selbst wird mit dem Kennwert bzw. der entsprechenden aktuellen Geschwindigkeit mittels der vorgesehenen Dämpferkennlinie eine zugehörige Dämpfungskraft und somit eine zugehörige aktuelle Feldstärke und insbesondere aktuelle Stromstärke ermittelt, die anschließend eingestellt wird, sodass in Echtzeit der Durchflusswiderstand des Dämpfungsventils angepasst wird. Dadurch wird es ermöglicht, unterschiedlichste Dämpferkennlinien vorzugeben, auszuwählen oder einzustellen, die anschließend durch die Dämpfereinrichtung selbsttätig eingehalten werden. Das ermöglicht einen Automatikmodus, bei dem der Fahrer grundsätzlich gar keine Einstellung mehr vornehmen muss.

Ein besonderer Vorteil des Verfahrens ist auch, dass ein angenehmes Ansprechverhalten zur Verfügung gestellt wird, da im Normalzustand ohne Störung kein Feld oder nur ein äußerst geringes Feld der Felderzeugungseinrichtung anliegt. Dadurch wird keine Losbrechkraft oder nur eine äußerst geringe Losbrechkraft erforderlich, um eine Dämpfung auszulösen. Die Dämpfereinrichtung wird nur bei tatsächlichen Stößen mit Strom versorgt. Im stoß- und schwingungsfreien Grundzustand wird für das Dämpferventil kein Strom benötigt. Dadurch wird ein sehr weiches Ansprechverhalten erzielt, dass vom Benutzer als angenehm empfunden wird.

Durch die Vorgabe einer Dämpferkennlinie kann auch ein weicher Übergang vom Low-Speed-Bereich zum High-Speed-Bereich eingestellt werden.

In allen Ausgestaltungen ist es besonders bevorzugt, dass die Feldstärke der Felderzeugungseinrichtung verringert wird, sobald die ermittelte aktuelle Relativgeschwindigkeit geringer als die direkt vorherige Relativgeschwindigkeit ist. Im Unterschied zu Stoßdämpfern aus dem Stand der Technik erfolgt die Steuerung bei dem erfindungsgemäßen Stoßdämpfer primär nicht anhand der Erkennung des Untergrundes, sondern es wird eine Echtzeiterkennung des aktuellen Zustandes durchgeführt und in Abhängigkeit von einer ermittelten Störung (des Grundzustandes) wird eine entsprechende Dämpfung eingestellt. Deshalb wird mit dem Verfahren beispielsweise die Wippbewegung beim Wiegetritt im Wesentlichen automatisch unterdrückt.

Die Einstellung oder insbesondere automatische Auswahl einer Dämpferkennlinie aus mehreren unterschiedlichen Dämpferkennlinien ist möglich und bevorzugt. Das erlaubt die Vorgabe unterschiedlicher Dämpferkennlinien beispielsweise für unterschiedliche Untergründe, um so ein noch weicheres oder härteres Ansprechverhalten und dergleichen zu ermöglichen. Möglich ist es auch, dass Daten gespeichert werden und anhand gespeicherter Kennwerte und dergleichen eine automatische Anpassung der Dämpferkennlinie an das Fahrverhalten erfolgt. Das ändert aber nichts daran, dass bei jedem einzelnen Stoß immer noch eine Echtzeitsteuerung der Dämpfungskraft des Stoßdämpfers erfolgt.

Vorzugsweise erfolgt die Bestimmung des Kennwertes mittels wenigstens eines Parametersets mit wenigstens einem Parameter, wobei wenigstens ein Parameter aus einer Gruppe von Parametern ermittelt wird, welche Zeitangeben, Zeitdifferenzen, Positionsangaben, Relativpositionen, Absolutpositionen, Relativgeschwindigkeiten, Absolutgeschwindigkeiten, Beschleunigungen, Relativbeschleunigungen und dergleichen mehr wenigstens der ersten und/oder der zweiten Komponente umfasst. Besonders bevorzugt wird aus dem Parameterset der Kennwert für die Relativgeschwindigkeit ermittelt.

In allen Ausgestaltungen ist es bevorzugt, dass die Dämpferkennlinie im Wesentlichen durch den Koordinatenursprung verläuft. Besonders bevorzugt läuft die Dämpferkennlinie genau durch den Koordinatenursprung. Möglich ist es aber auch, dass sie knapp neben dem Koordinatenursprung vorbeiläuft. Unter "im Wesentlichen durch den Koordinatenursprung" werden im Sinne der vorliegenden Anmeldung auch Abweichungen verstanden, die innerhalb von 5 % der ausgelegten Maximalwerte liegen. Für ein besonders weiches Ansprechverhalten ist eine Dämpfungskraft nahe null bei einer Relativgeschwindigkeit von null vorteilhaft. Bevorzugt ist es, dass die Dämpferkennlinie im Betriebszustand mit auf dem Fahrrad sitzenden Fahrer bei null Geschwindigkeit eine Kraft geringer 100 N und insbesondere kleiner 50 N aufweist.

In allen Ausgestaltungen beträgt der Zeitabstand zweier aufeinanderfolgender Ermittlungen des (jeweils aktuellen) Kennwertes weniger als 30 und insbesondere weniger als 20 ms. Insbesondere ist der Zeitabstand kleiner 10 ms, vorzugsweise kleiner 5 ms oder sogar kleiner als 3 ms oder 2 ms. Durch einen geringen Zeitabstand kann sehr schnell eine auftretende Störung erfasst werden.

Die Regelgeschwindigkeit ist schneller 50 ms und insbesondere schneller als 40 ms. Vorzugsweise beträgt die Regelgeschwindigkeit weniger als 30 und besonders bevorzugt weniger als 20 ms. Besonders bevorzugt wird eine Regelgeschwindigkeit von kleiner als 10 ms erreicht. Dabei wird unter der Regelgeschwindigkeit hier die Zeitspanne verstanden, die für die Erfassung durch den Sensor, für die Auswertung der Sensorsignale und für die Einstellung des Feldes und den Aufbau der Dämpfungskraft vergeht. Insbesondere wird unter der Regelgeschwindigkeit die Zeitdauer eines gesamten Zyklus des Steuerkreislaufes verstanden.

Regelgeschwindigkeiten von beispielsweise 30, oder 20 oder 10 ms haben sich als ausreichend schnell im Bereich von Fahrrädern herausgestellt. Durch die Verwendung von rheologischen Fluiden und insbesondere eines magnetorheologischen oder auch elektrorheologischen Fluides können Reaktionszeiten im Fluid von deutlich kleiner 10 ms erreicht werden. Dabei können mit dem Stoßdämpfer hier auch unter voller Last die Reaktionszeiten und Regelgeschwindigkeiten eingehalten werden. Mit konventionellen mechanischen Ventilen ist eine solche Reaktionsgeschwindigkeit mit bezahlbarem Aufwand für serientaugliche Produkte nicht möglich. Bekannte konventionelle Fahrraddämpfer haben Reaktionszeiten von 250 ms oder mehr. Außerdem ist bei konventionellen Ventilen für eine Änderung des Strömungswiderstandes unter voller Last eine erhebliche Energie nötig. Bei einem magnetorheologischen Dämpfungsventil muss im Gegensatz zu konventionellen Ventilen kein Ventilspalt verkleinert oder vergrößert werden. Das magnetorheologische Dämpfungsventil muss nur mit einem Magnetfeld beaufschlagt werden, wobei der Energieaufwand zur Erzeugung des Felds unabhängig von der Strömungsgeschwindigkeit des Mediums im Dämpfungsventil ist.

Zwischen der Relativbewegung der zwei Komponenten und daraus resultierender angepasster Dämpferkraft können in allen Fällen weniger als 20 ms und insbesondere weniger als 10 ms und vorzugsweise weniger als 5 ms vergehen.

In allen Ausgestaltungen ist es auch möglich, über die Sensordaten oder über sonstige Daten wie GPS-Sensoren oder dergleichen einen Parameter für die Boden-/Untergrund-/Fahrbahnbeschaffenheit zu ermitteln und in Abhängigkeit von der Bodenbeschaffenheit eine von beispielsweise mehreren vorgegebenen Dämpferkennlinien auszuwählen.

Möglich ist es auch, dass vorausschauende Modelle eingesetzt werden, bei der die letzten Messwerte ausgewertet werden und beispielsweise eine Kurve durch die Stützstellen gelegt wird, um Voraussagen für die folgenden Messwerte zu ermitteln.

Besonders bevorzugt ist ebenfalls, dass die Dämpferkennlinie in der Nähe einer Endlage der Dämpfereinrichtung steiler eingestellt wird, um einen weicheren Endanschlag zu gewährleisten. Insbesondere, wenn Positionsdaten erfasst werden, kann die Nähe einer Endlage einfach festgestellt werden. Über eine entsprechende Erhöhung des Feldes mit der Felderzeugungseinrichtung kann eine stärkere Endlagendämpfung eingestellt werden.

Möglich ist es auch, dass durch mechanische oder hydraulische Mittel in der Nähe einer Endlage eine Variation der Dämpferkennlinie erfolgt.

Der erfindungsgemäße Stoßdämpfer ist für ein wenigstens teilweise muskelbetriebenes Fahrrad vorgesehen und umfasst wenigstens eine Dämpfereinrichtung, die zur Dämpfung einer Relativbewegung zwischen einer ersten und einer zweiten Komponente angeordnet ist. Wenigstens eine Steuereinrichtung und wenigstens eine Speichereinrichtung und wenigstens eine Sensoreinrichtung sind ebenfalls vorgesehen. Die Dämpfereinrichtung umfasst wenigstens ein steuerbares Dämpfungsventil mit wenigstens einer insbesondere als elektrischen Spuleneinrichtung ausgeführten Felderzeugungseinrichtung. Mit einem Feld der Felderzeugungseinrichtung ist ein feldempfindliches Medium beeinflussbar, um eine Dämpfungskraft der Dämpfereinrichtung durch Erzeugen einer Feldstärke der Felderzeugungseinrichtung zu beeinflussen. Die Steuereinrichtung und die Sensoreinrichtung sind dazu ausgebildet, wenigstens einen Kennwert für eine aktuelle Relativgeschwindigkeit der ersten und der zweiten Komponente zueinander periodisch in Echtzeit zu ermitteln. Die Steuereinrichtung ist dazu ausgebildet, mit dem Kennwert aus einer in der Speichereinrichtung abgelegten Dämpferkennlinie ein Maß für eine zu erzeugende aktuelle Feldstärke in Echtzeit abzuleiten. Die Steuereinrichtung und die Felderzeugungseinrichtung sind dazu ausgebildet, in Echtzeit die aktuell zu erzeugende Feldstärke einzustellen, um eine Dämpfungskraft in Echtzeit einzustellen, die sich aus der vorbestimmten Dämpferkennlinie bei dem ermittelten Kennwert ergibt.

Auch der erfindungsgemäße Stoßdämpfer hat viele Vorteile, da er eine flexible Steuerung ermöglicht. Gleichzeitig wird ein energiesparender Betrieb ermöglicht, bei dem jederzeit das Dämpfungsventil mit einem so gering wie möglichen Feld aber so hoch wie nötigen Feld beaufschlagt wird. Bei Einsatz einer elektrischen Spuleneinrichtung als Felderzeugungseinrichtung kann die Stromstärke jederzeit so klein wie möglich gehalten werden.

Das Maß für eine zu erzeugende aktuelle Feldstärke kann beispielsweise die Stromstärke oder die Spannung sein, mit der eine Felderzeugungseinrichtung beaufschlagt wird, um die gewünschte zu erzeugende aktuelle Feldstärke wenigstens näherungsweise zu erzeugen.

Der Kennwert kann zur Ereigniserkennung verwendet werden.

Ein erfindungsgemäßer Stoßdämpfer für ein wenigstens teilweise muskelbetriebenes Fahrrad umfasst wenigstens eine Dämpfereinrichtung, die zur Dämpfung einer Relativbewegung zwischen einer ersten und einer zweiten Komponente angeordnet ist. Wenigstens eine Steuereinrichtung und wenigstens eine Speichereinrichtung und wenigstens eine Sensoreinrichtung sind ebenfalls vorgesehen. Die Dämpfereinrichtung umfasst wenigstens ein steuerbares Dämpfungsventil mit wenigstens einer insbesondere als elektrischen Spuleneinrichtung ausgeführten Felderzeugungseinrichtung. Mit einem Feld der Felderzeugungseinrichtung ist ein feldempfindliches Medium beeinflussbar, um eine Dämpfungskraft der Dämpfereinrichtung durch Erzeugen einer Feldstärke der Felderzeugungseinrichtung zu beeinflussen. Die Steuereinrichtung ist dazu eingerichtet und ausgebildet, einen Steuerkreislauf periodisch zu steuern. Die Steuereinrichtung und die Sensoreinrichtung sind dazu ausgebildet, wenigstens einen Kennwert für eine aktuelle Relativgeschwindigkeit der ersten und der zweiten Komponente zueinander periodisch in Echtzeit zu ermitteln. Die Steuereinrichtung ist dazu ausgebildet, mit dem Kennwert aus einer in der Speichereinrichtung abgelegten Dämpferkennlinie eine aktuelle einzustellende Stromstärke in Echtzeit abzuleiten. Die Steuereinrichtung und die Felderzeugungseinrichtung sind dazu ausgebildet, in Echtzeit die aktuell einzustellende Stromstärke einzustellen, um innerhalb des Steuerkreislaufes eine Dämpfungskraft in Echtzeit einzustellen, die sich aus der vorbestimmten Dämpferkennlinie bei dem ermittelten Kennwert ergibt.

Besonders bevorzugt weist die Dämpfereinrichtung eine Grundkennlinie auf, die durch die mechanische Ausgestaltung und durch mechanische Ventile vorgegeben wird. Vorzugsweise ist bei der Grundkennlinie die Steigung der Dämpfungskraft bei negativen Relativgeschwindigkeiten, also beim Ausfedern, steiler als die Steigung der Dämpfungskraft bei positiven Relativgeschwindigkeiten. Dadurch wird schon mit der Grundkennlinie eine stärkere Zugstufendämpfung ermöglicht.

Insbesondere ist wenigstens ein mechanisches Ventil als mechanisches Einwegventil ausgebildet. Es ist möglich, dass zwei unterschiedliche mechanische Ventile parallel geschaltet sind.

Vorzugsweise werden wenigstens ein mechanisches Ventil und wenigstens ein Dämpfungskanal, der mit einem Feld der Felderzeugungseinrichtung beaufschlagbar ist, in Reihe geschaltet. In allen Ausgestaltungen ist vorzugsweise ein maximaler Strömungsquerschnitt in der Druckstufe unterschiedlich von einem maximalen Strömungsquerschnitt in der Zugstufe. Dabei kann der maximale Strömungsquerschnitt in der Druckstufe und/oder in der Zugstufe über wenigstens ein mechanisches Einwegventil begrenzt werden.

In allen Ausgestaltungen erfasst die Steuereinrichtung vorzugsweise in vordefinierten festen oder variablen Zeitabständen das Sensorsignal und leitet daraus durch Vergleich mit einer in einer Speichereinrichtung hinterlegten Dämpferkennlinie oder Steuerkurve ein Steuersignal ab und steuert die Felderzeugungseinrichtung damit an, um den Strömungswiderstand durch das Dämpfungsventil entsprechend der hinterlegten Dämpferkennlinie einzustellen.

Bei der Erfassung der Kennwerte in bekannten Zeitabständen kann die aktuelle Relativbewegung selbst als Maß und somit Kennwert für die aktuelle Relativgeschwindigkeit genommen werden. Es kann aber auch die aktuelle Relativgeschwindigkeit durch Division der aktuellen Relativbewegung durch den Zeitabstand berechnet werden. Möglich ist es auch, dass Impulse gezählt werden, die jeweils für eine bestimmte Relativbewegung stehen. Die Anzahl der Impulse pro Zeiteinheit definiert dann ebenfalls eine Relativgeschwindigkeit und somit einen Kennwert.

In einer weiteren vorteilhaften Ausgestaltung ist beispielsweise eine Absenkung des Fahrzeuges während der Fahrt möglich. Beispielsweise kann eine Absenkung der Federgabel oder ein gezieltes Einfedern des Hinterradstoßdämpfers und/oder der Sattelstütze erfolgen. Eine solche Absenkung erfolgt vorzugsweise nicht sofort, sondern dynamisch, d. h. in Abhängigkeit von der Dämpferbewegung bzw. von dem Dämpferhub. Die Zugstufe des Dämpfers wird an einer gewünschten Stellung (Hubstellung), welche aus der Einfeder-Dämpferbewegung z. B. beim Bremsen oder Kurvenfahren resultiert, in kürzester Zeit gesperrt oder wenigstens am vollen Ausfedern gehindert. Damit das Absenken schneller oder stärker geschieht, kann die Druckstufe zum richtigen Zeitpunkt kurzzeitig weich oder weicher geschaltet werden und dann bei der Bewegungsumkehr die Zugstufe schnell hart oder härter.

Beim Einfedern muss die Druckstufe aber dann wieder (insbesondere schnell) auf weicher geschaltet werden, damit ein Einfederkomfort erhalten bleibt.

Ebenso ist das Nahfelderkennungssystem in Kombination mit dem zuvor beschriebenen in Echtzeit schaltenden Stoßdämpfer zur Reduktion der Gesamtzeit (Erkennen bis Kraftänderung am Dämpfer) z. B. in Fahrrädern denkbar.

Dies gilt auch für Spracherkennungssysteme. Die Spracherkennung benötigt relativ viel Rechenzeit. Nur in Kombination mit einem schnellen dem Spracherkennungssystem nachfolgenden Gesamtsystem (Elektronik, Aktor mit feldempfindlichen rheologischen Medium) kann ein für den Benutzer gutes Ergebnis erzielt werden. Eine Spracherkennung kann auch mittels eines Mobiltelefons oder dergleichen erfolgen, welches mit der Bedieneinheit oder dem Steuergerät kommuniziert.

In bevorzugten Ausgestaltungen ist die Felderzeugungseinrichtung des Stoßdämpfers ohne Ereignis bzw. ohne Relativbewegung der ersten und der zweiten Komponente zueinander im Wesentlichen stromlos oder sogar vollständig stromlos. Insbesondere wird erst beim Eintreten eines Ereignisses bzw. beim Auftreten einer Relativbewegung der ersten und der zweiten Komponente zueinander elektrische Energie für die Dämpfung benötigt. Ein Ereignis ist dabei das Auftreten einer Relativbewegung der ersten und der zweiten Komponente zueinander. Unter "im Wesentlichen stromlos" wird im Sinne dieser Anmeldung ein Zustand verstanden, in welchem die Felderzeugungseinrichtung weniger als 10 % und insbesondere weniger als 5 % und vorzugsweise weniger als 1 % und besonders bevorzugt weniger als 0,5 % der maximalen Stromstärke benötigt. Unter "vollständig stromlos" wird ein Zustand verstanden, in welchem die Felderzeugungseinrichtung absolut keinen Strom benötigt oder in welchem nur geringste Stromstärken im Bereich kleiner 10 mA und insbesondere kleiner 1 mA und vorzugsweise kleiner 500 µA benötigt.

Weitere Vorteile und Eigenschaften der vorliegenden Erfindung ergeben sich aus dem Ausführungsbeispiel, das mit Bezug auf die beiliegenden Figuren im Folgenden beschrieben wird.

In den Figuren zeigen:
- Fig. 1: eine schematische Ansicht eines mit einem erfindungsgemäßen Stoßdämpfer ausgerüsteten Fahrrads;
- Fig. 2: eine schematische Ansicht der Kommunikationsverbindungen des Fahrrads nach Fig. 1;
- Fig. 3: eine schematische geschnittene Ansicht eines Stoßdämpfers des Fahrrads nach Fig. 1 mit einer Elektronikeinheit;
- Fig. 4: eine geschnittene Seitenansicht des Stoßdämpfers nach Fig. 3 in einer vergrößerten Darstellung in der Druckstufe;
- Fig. 5: eine geschnittene vergrößerte Darstellung des Stoßdämpfers in der Zugstufe;
- Fig. 6: die Kolbeneinheit des Stoßdämpfers nach Fig. 3;
- Fig. 7: den Querschnitt A-A aus Fig. 6;
- Fig. 8: eine Prinzipskizze der fächerartigen Dämpfungskanäle; und
- Fig. 9: einen vergrößerten Querschnitt durch die Kolbeneinheit;
- Fig. 10: eine erste schematische Darstellung einer Dämpferkennlinie für den Stoßdämpfer nach Fig. 3;
- Fig. 11: eine schematische Darstellung der hydraulischen Grundkennlinie des Stoßdämpfers nach Fig. 3 und zwei verschiedene Dämpferkennlinien;
- Fig. 12: den zeitlichen Verlauf des Federweges, der Kolbengeschwindigkeit, der Dämpfungskraft und der angelegten Stromstärke für den Stoßdämpfer nach Fig. 3 bei einem Sprung; und
- Fig. 13: einen anderen Dämpferkolben für den Stoßdämpfer nach Fig. 3.

Mit Bezug auf die beiliegenden Figuren wird im Folgenden ein Ausführungsbeispiel eines mit Stoßdämpfern 100 ausgerüsteten Fahrrads 200 erläutert.

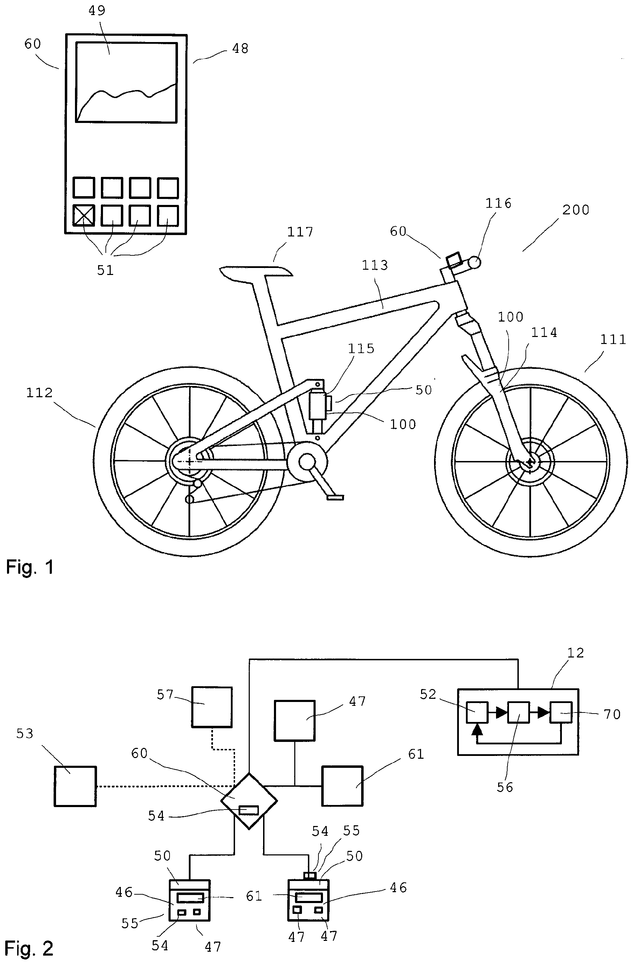

Fig. 1 zeigt eine schematische Darstellung eines Fahrrades 200, welches als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 einen Lenker 116 und einen Sattel 117 auf.

Das Vorderrad 111 verfügt über einen als Federgabel 114 ausgeführten Stoßdämpfer 100 und an dem Hinterrad ist ein als Hinterraddämpfer 115 ausgeführter Stoßdämpfer 100 vorgesehen. Eine zentrale Steuereinrichtung 60 ist hier an dem Lenker 116 vorgesehen.

Die zentrale Steuereinrichtung 60 kann auch als Fahrwerksteuerung eingesetzt werden und sowohl die Federgabel 114 als auch den Hinterradstoßdämpfer 115 synchron steuern. Die Steuerung der Stoßdämpfer 100 und weiterer Fahrradkomponenten kann in Abhängigkeit verschiedenster Parameter erfolgen und erfolgt auch anhand von sensorischen Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann.

Zusätzlich weist jeder Stoßdämpfer 100 wenigstens eine Steuereinrichtung 46 an einer austauschbar vorgesehenen Elektronikeinheit 50 auf. Die Elektronikeinheiten 50 umfassen wenigstens eine Batterieeinheit 61. Die Batterieeinheiten 61 können zusammen mit der jeweiligen Elektronikeinheit oder separat gewechselt werden. Beispielsweise können wiederaufladbare Batterieeinheiten vorgesehen sein, die zusammen mit der Elektronikeinheit 50 dem Stoßdämpfer mit einem Handgriff entnommen werden können, um die Elektronikeinheit wieder aufzuladen. Möglich ist auch eine Energieversorgung durch eine zentrale Batterieeinheit oder die Unterstützung oder der Betrieb durch einen Dynamo oder dergleichen.

Hier ist auch eine Steuereinrichtung 46 oder eine Steuereinheit in den Stoßdämpfer integriert, wobei die Steuereinheit die grundlegenden Funktionen zur Verfügung stellt. Die Bedienung erfolgt dann über die Elektronikeinheit 50 oder über die zentrale Steuereinrichtung 60. Mit der Steuereinrichtung 60 oder den Steuereinrichtungen 46 können die Dämpfungseigenschaften der Federgabel 114 und des Hinterradstoßdämpfers 115 eingestellt werden.

Die zentrale Steuereinrichtung 60 wird über eine Bedieneinrichtung 48 bedient. Es ist möglich, dass die Steuereinrichtung 60 eine Anzeigeeinrichtung 49 und/oder mehrere Bedienknöpfe 51 aufweist. Möglich ist es auch, dass die Steuereinrichtung berührungsempfindlich oder näherungssensitiv ausgeführt ist, sodass eine Bedienung durch Berührung entsprechender Schaltflächen oder dergleichen möglich ist.

Die Steuereinrichtung 60 kann dann auch als Fahrradcomputer dienen und Informationen über die aktuelle Geschwindigkeit, sowie über die Durchschnittsgeschwindigkeit und/oder die Tages-, Tour-, Runden- und Gesamtkilometer anzeigen. Möglich ist auch die Anzeige der aktuellen Position, der momentanen Höhe oder der gefahrenen Strecke sowie des Streckenprofils.

Fig. 2 zeigt eine schematische Darstellung der Kommunikationsverbindungen der beteiligten Komponenten. Die zentrale Steuereinrichtung 60 kann drahtgebunden oder drahtlos mit den einzelnen Komponenten verbunden sein, beispielsweise über WLAN, Bluetooth, ANT+, GPRS, UMTS, LTE oder sonstige Übertragungsstandards. Die gepunktet dargestellte Verbindung mit dem Internet 53 ist eine drahtlose Verbindung. Die Steuereinrichtung 60 kann mit der Batterieeinheit 61 verbunden sein oder eine eigene Energieversorgung aufweisen. Weiterhin kann die Steuereinrichtung 60 mit einem Sensor 47 oder mit mehreren Sensoren 47 verbunden sein. Die grafische Bedieneinheit 57 bzw. Anzeigeeinheit kann auch drahtlos mit der Steuereinheit 60 verbunden sein. Drahtlos oder drahtgebunden kann der Stoßdämpfer 100 der Federgabel 114 oder der Stoßdämpfer 100 des Hinterraddämpfers 115 angeschlossen sein. Die Verbindung erfolgt über eine Netzwerkschnittstelle 54, die als Funknetzschnittstelle 55 oder als Kabelanschluss 56 ausgeführt sein kann.

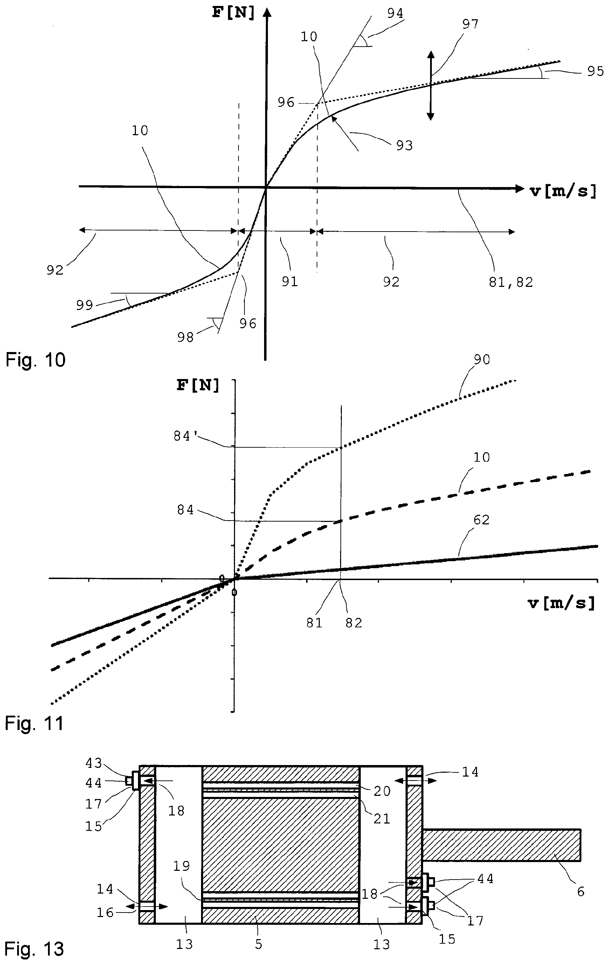

In Fig. 2 ist der Steuerkeislauf 12 schematisch dargestellt, der in der Speichereinrichtung abgelegt und in der Steuereinrichtung 60 bzw. den Steuereinrichtungen 46 hinterlegt oder einprogrammiert ist. Der Steuerkreislauf 12 wird im Betrieb periodisch und insbesondere kontinuierlich periodisch durchgeführt. Im Schritt 52 wird z. B. mit den Sensoren 47 eine aktuelle Relativbewegung bzw. aktuelle Relativgeschwindigkeit der ersten Komponente zu der zweiten Komponente erfasst. Aus den Werten des Sensors 47 oder der Sensoren wird im Schritt 52 ein Kennwert abgeleitet, der repräsentativ für die aktuelle Relativgeschwindigkeit ist. Im Schritt 56 wird dann anschließend aus dem ermittelten Kennwert 81 (vgl. Fig. 10, 11) unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke abgeleitet, mit welcher die einzustellende Dämpfungskraft wenigstens näherungsweise erreicht wird. Das Maß kann die Feldstärke selbst sein oder aber die Stromstärke angeben, mit welcher die einzustellende Dämpfungskraft wenigstens etwa erreicht wird. Im darauf folgenden Schritt 70 wird die aktuell einzustellende Feldstärke erzeugt oder die entsprechende Stromstärke an die elektrische Spuleneinrichtung als Felderzeugungseinrichtung angelegt, sodass innerhalb eines einzigen Zyklus des Steuerkreislaufes 12 die Dämpfungskraft erzeugt wird, die bei der gewählten oder vorbestimmten Dämpferkennlinie zu der aktuellen Relativgeschwindigkeit der ersten Komponente zu der zweiten Komponente entspricht. Anschließend startet der nächste Zyklus und es wird wieder Schritt 52 durchgeführt.

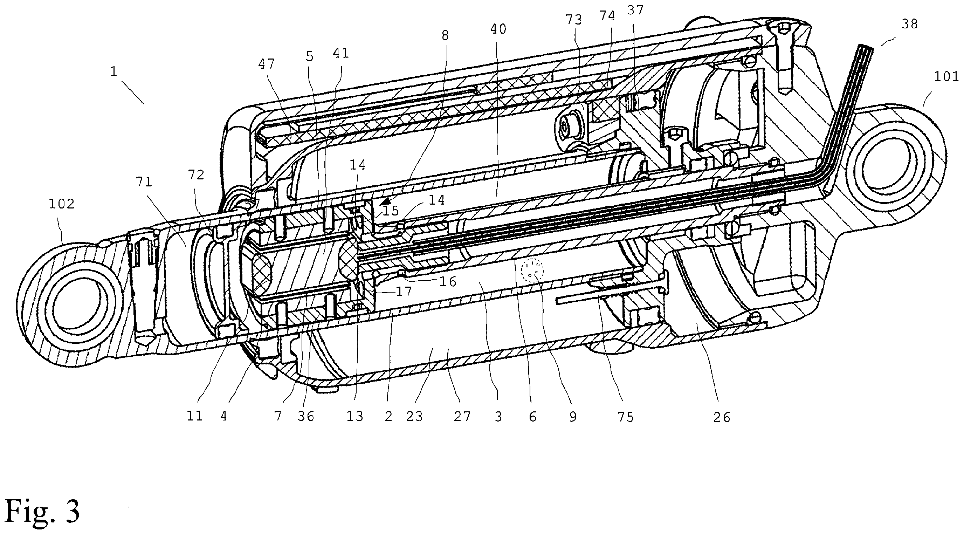

Fig. 3 zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen des Rahmens befestigt, um Relativbewegungen zu dämpfen.

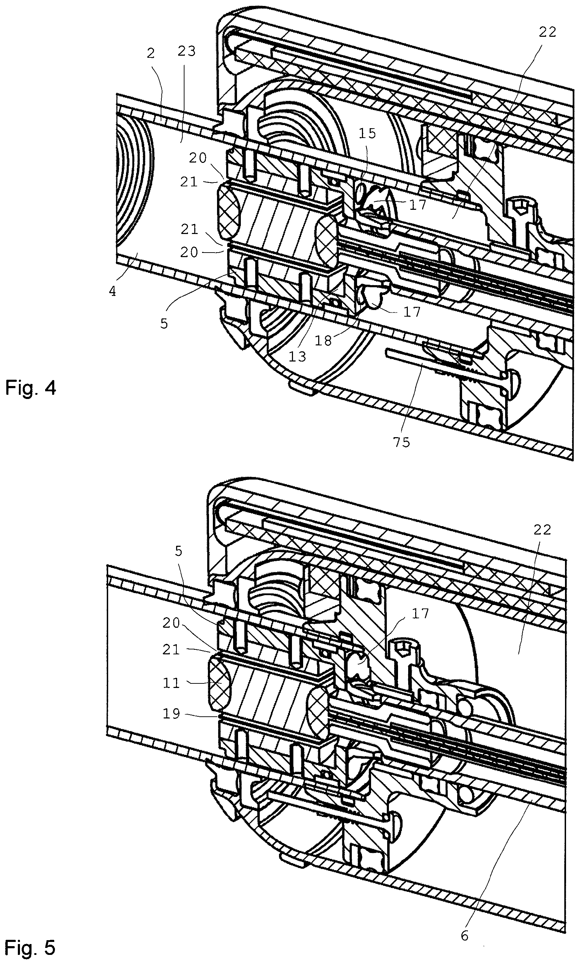

In dem Dämpfergehäuse 2 ist eine Dämpfungskolbeneinheit 40 vorgesehen, die einen Dämpfungskolben 5 als Dämpfungsventil 8 und eine damit verbundene Kolbenstange 6 umfasst. In dem Dämpfungskolben 5 ist das Dämpfungsventil 8 vorgesehen, welches hier eine Felderzeugungseinrichtung 11 und insbesondere eine elektrische Spule umfasst, um eine entsprechende Feldstärke zu erzeugen. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle 20, 21 (vgl. Fig. 4). Dadurch wird eine effektive Beeinflussung des sich in den Dämpfungskanälen 20 und 21 befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle 20 und 21, die am anderen Ende in den Sammelraum 13 bzw. in die Sammelräume 13 münden. Dort sammelt sich nach dem Austritt aus den Dämpfungskanälen 20, 21 das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, dass der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 27 der Federeinrichtung 26 umgeben. Dadurch wird ein besonders kompakter Aufbau ermöglicht.

Ein mit einer Feder beaufschlagter Stößel 75 sorgt bei vollständigem Ausfedern des Stoßdämpfers 100 für einen Druckausgleich zwischen der ersten Federkammer 26 und der zweiten Federkammer 27.

Der Federungskolben 37 ist am Ende des Dämpfergehäuses 2 vorgesehen. Daran angeordnet ist ein Halter 73, der einen Magneten 74 hält. Der Magnet 74 ist Teil eines Sensors 47. Der Sensor 47 umfasst ein Magnetpotentiometer, welches ein Signal erfasst, welches für die Position des Magneten 74 und damit des Federungskolbens repräsentativ ist. Eine solches Potentiometer 47 erlaubt nicht nur die Bestimmung eines relativen Ortes, sondern erlaubt hier auch die absolute Feststellung des Ein- bzw. Ausfederungsstandes des Stoßdämpfers 100.

Fig. 4 und 5 zeigen partiell vergrößerte Details der Darstellung gemäß Fig. 3, wobei in Fig. 4 der Druckstufenfall und in Fig. 5 der Zugstufenfall dargestellt ist.

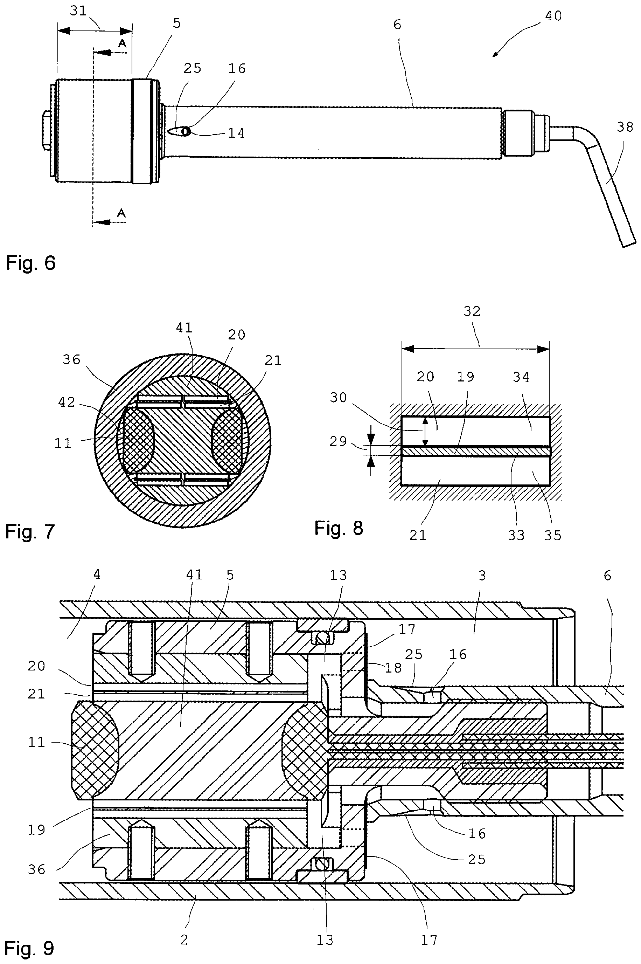

In dem in Fig. 4 dargestellten Druckstufenfall, also beim Einfedern, tritt aus der zweiten Dämpferkammer 4 das magnetorheologische Fluid 9 durch die Dämpfungskanäle 20, 21 in den Dämpfungskolben 5 ein. Der Durchflusswiderstand durch die Dämpfungskanäle 20, 21 hängt von dem Magnetfeld der als Spule ausgeführten Felderzeugungseinrichtung 11 ab. Nach dem Verlassen der Dämpfungskanäle 20, 21 sammelt sich das magnetorheologische Fluid in den beiden Sammelräumen 13 (vgl. Fig. 9 und 13) und tritt anschließend durch die im Druckstufenfall durchlässigen Strömungsöffnungen 15 mit den Einwegventilen 17 hindurch.

In dem in Fig. 5 dargestellten Zugstufenfall strömt das magnetorheologische Fluid von der einen Seite 22, der Seite der Kolbenstange 6, auf den Dämpfungskolben 5 zu. Die Einwegventile 17 an den Strömungsöffnungen 15 schließen automatisch, sodass nur noch die als Durchgangsöffnungen 16 ausgeführten Strömungsöffnungen 14 in der Kolbenstange 6 übrig bleiben, um das magnetorheologische Fluid in den Dämpfungskolben 5 hineinzubringen. Nachdem das magnetorheologische Fluid 9 durch die Durchgangsöffnung 16 in dem Sammelraum 13 bzw. in die Sammelräume 13 eingetreten ist, werden alle fächerartigen Dämpfungskanäle 20, 21 gleichmäßig durch das magnetorheologische Fluid durchströmt, bis das magnetorheologische Fluid an der anderen Strömungsseite 23 aus dem Dämpfungskolben 5 austritt. Klar erkennbar ist in Fig. 5 auch, dass der Dämpfungskolben 5 eine Spule als Felderzeugungseinrichtung 11, einen Kern 41 aus gut magnetisch leitendem Material und einen Ringleiter 36 umfasst. Weiterhin kann ein Isoliermaterial 42 vorgesehen sein.

Durch den Sammelraum 13 wird eine effektive Reihenschaltung der insbesondere als Shim-Ventile ausgeführten Einwegventile 17 mit den Dämpfungskanälen 20, 21 ermöglicht. Durch den Sammelraum 13 wird eine insbesondere unzulässig hohe Belastung der Fächerwandungen 19 durch unterschiedliche Drücke in den Dämpferkanälen 20, 21 vermieden. Dabei können Betriebsdrücke von 30 bar, 50 bar und mehr auftreten, die bei unterschiedlicher Belastung auf beiden Seiten einer Fächerwandung 19 zur Zerstörung der dünnen Fächerwandung 19 führen können.

Fig. 6 zeigt eine Seitenansicht der Dämpfungskolbeneinheit 40 mit dem Dämpfungskolben 5 und der Kolbenstange 6, aus der am Ende das Kabel 38 hervorragt. Die Länge 31 der Dämpfungskanäle 20, 21 ist beispielhaft angezogen. Klar erkennbar ist in dieser Darstellung die als Durchgangsöffnung 16 ausgebildete Strömungsöffnung 14 mit dem sich daran anschließenden schräg zulaufenden Einlauf 25, der für eine selbsttätig zunehmende Endlagendämpfung sorgt. Federt der Stoßdämpfer 100 fast vollständig aus, so schiebt sich der Federungskolben 37 zunächst über die Strömungsöffnung 16 und anschließend über den Einlauf 25, sodass der Durchflussquerschnitt immer weiter abnimmt und somit die Dämpfungskraft automatisch erhöht wird.

Fig. 7 zeigt den Querschnitt A-A aus Fig. 6. Der Kern 41 ist von der als Spule ausgeführten Felderzeugungseinrichtung 11 umgeben. In dem Kern sind Dämpfungskanäle 20 und 21 angeordnet. Radial umgeben werden der Kern und die Spule durch Ringleiter 36.

Fig. 8 zeigt eine vergrößerte Darstellung der Dämpfungskanäle 20, 21, die in dem Kern 41 vorgesehen sind. Die fächerartigen Dämpfungskanäle 20, 21 werden durch eine Fächerwandung 19 voneinander getrennt. Dabei beträgt eine Wandstärke 29 der Fächerwandung 19 weniger als eine Höhe 30 eines Dämpfungskanals 20 bzw. 21. Auch die Querschnittsfläche 33 der Fächerwandung 19 ist erheblich kleiner als die Querschnittsfläche 34 bzw. 35 der Dämpfungskanäle 20 bzw. 21. Im dargestellten Beispiel liegt die Wandstärke 29 der Fächerwandung 19 bei etwa 0,3 bis 0,6 mm. Die lichte Höhe 30 des Dämpfungskanals 20 bzw. 21 ist mit 0,5 mm bis 0,9 mm größer.

Typische Werte für Dämpfungskanäle 20, 21 eines Hinterraddämpfers 115 sind, ohne jedoch darauf beschränkt zu sein, Kanallängen 31 zwischen etwa 10 und 30 mm, Kanalbreiten zwischen etwa 5 und 20 mm und Kanalhöhen zwischen etwa 0,2 und 1,5mm. Dabei können bis zu zehn Dämpfungskanäle 20, 21 vorhanden sein, die wiederum in einer oder mehreren Gruppen zusammengefasst sein können. Innerhalb einer solchen Gruppe sind die Dämpfungskanäle 20, 21 durch Fächerwandungen 19 voneinander getrennt, die typische Wandstärken zwischen 0,2 und 1 mm haben.

Der freie Strömungsquerschnitt als Summe aller Dämpfungskanäle 20, 21 ist stark abhängig von der Kanalform, dem verwendeten Fluid, der Kolbenfläche und dem gewünschten Kraftbereich. Typischerweise liegt der freie Strömungsquerschnitt im Bereich zwischen 10 und 200 Quadratmillimeter.

Fig. 10 zeigt eine Dämpferkennlinie 10 des Stoßdämpfers 100 nach Fig. 3 mit dem Dämpfungsventil 8 in einem Kraft-Geschwindigkeits-Diagramm. Der Low-Speed-Bereich 91 und der High-Speed-Bereich 92 sind über eine sanfte Abrundung mit einem Radius 93 verbunden. Die Dämpferkennlinie 10 ist hier unsymmetrisch aufgebaut. Die Dämpferkennlinie 10 zeigt zwar grundsätzlich ähnliche Verläufe für die Druck- und die Zugstufe, aber die Steigung ist in der Zugstufe steiler vorgegeben als in der Druckstufe.

Die Dämpferkennlinie 10 wird jederzeit in Echtzeit elektrisch unter Berücksichtigung der hydraulischen Grunddämpfung eingestellt, sodass bei jedem Stoß bzw. Ereignis oder jeder Störung 85 noch während des Stoßes 85 oder der Störung selbst eine entsprechende Dämpfungskraft eingestellt wird.

Die Steigung 94 der Dämpferkennlinie 10 im Low-Speed-Bereich 91 kann sowohl für die Druckstufe als für die Zugstufe jeweils durch eine Gerade mit im Wesentlichen linearer Steigung 94 bzw. 98 gut angenähert werden. Die vorgegebene Dämpferkennlinie 10 verläuft durch den Koordinatenursprung, sodass bei einer Relativgeschwindigkeit des Dämpferkolbens 5 von null auch keine Dämpfungskraft vorliegt. Das ermöglicht ein sehr weiches und angenehmes Ansprechverhalten.

Auch im High-Speed-Bereich 92 sind die Steigungen 95 bzw. 99 hier im Wesentlichen linear vorgegeben. Dazwischen kann sich jeweils ein gekrümmter Zwischenabschnitt 93 erstrecken, um Knickpunkte 96 zu vermeiden. Es kann auch oder ein linearer Zwischenabschnitt 93 oder es können mehrere lineare oder leicht gekrümmte Zwischenabschnitte 93 vorgesehen sein, um einen gekrümmten Verlauf anzunähern.

Eingezeichnet ist weiterhin ein Pfeil 97, der die Auswirkung eines unterschiedlich starken Magnetfeldes anzeigt. Mit einem stärkeren Magnetfeld verschiebt sich die Dämpferkennlinie nach oben, während sie sich bei einem schwächeren Magnetfeld nach unten verschiebt.

Punktiert eingezeichnet ist eine Dämpferkennlinie, bei der kein Zwischenabschnitt 93 vorgesehen ist, sodass sich an den Punkten 96 mehr oder weniger stark ausgeprägte Knickpunkte ergeben.

Die Steigungen 94 und 98 im Low-Speed-Bereich 91 und die Steigungen 95 und 99 in den High-Speed-Bereichen 92 sind wie auch die gesamte Dämpferkennlinie 10 änderbar und an die aktuellen Wünsche und Bedingungen anpassbar. Dadurch kann bei Erkennung eines entsprechend veränderten Untergrundes eine andere Dämpferkennlinie automatisch gewählt werden, die eine weichere oder aber härtere Dämpfung vorgibt. Unabhängig von der gewählten Dämpferkennlinie wird jederzeit jeder Stoß in Echtzeit gedämpft.

Die Steigungen 95 und 99 im jeweiligen High-Speed-Bereich 92 werden ebenfalls vorgegeben und sind bei Bedarf veränderbar. Die Stromversorgung für die Steuereinrichtung und die elektrische Spule als Felderzeugungseinrichtung 11 kann durch eine Batterie, einen Akku, einen Generator, Dynamo oder insbesondere auch einen Nabendynamo erfolgen.

Fig. 11 stellt die Grundkennlinie 62 und zwei unterschiedliche Dämpferkennlinien 10 und 90 dar. Aufgetragen ist jeweils die Dämpfungskraft über der Relativgeschwindigkeit der Komponenten 101 und 102 zueinander.

Die Grundkennlinie 62 stellt die hydraulischen Eigenschaften des Stoßdämpfers 100 ohne Anlegen eines Magnetfeldes dar. Durch die Einwegventile 17 unterscheidet sich die Steigung der Grundkennlinie in der Druckstufe und in der Zugstufe und ist in der Zugstufe steiler als in der Druckstufe.

Die Dämpferkennlinien 10 und 90 sind in Fig. 11 unsymmetrisch aufgebaut. Die Dämpferkennlinien 10 und 90 stellen die resultierenden Dämpfungskräfte über der Relativgeschwindigkeit dar und setzen sich jeweils aus der Dämpfungskraft der Grundkennlinie 62 und der magnetisch erzeugten Dämpfungskraft zusammen. Das bedeutet, dass jeweils eine geringere Dämpfungskraft als die Dämpfungskraft der Grundkennlinie 62 bei einer bestimmten Ein- oder Ausfedergeschwindigkeit nicht einstellbar ist. Die Grundkennlinie 62 muss bei der Auslegung berücksichtigt werden. Eine geringere Dämpfung ist prinzipbedingt nicht möglich. Andererseits wird bei einer besonders geringen Differenz zwischen einer Dämpferkennlinie 10 und der Grundkennlinie 62 besonders wenig elektrische Energie benötigt, sodass eine gewisse Anpassung der Grundkennlinie 62 an die weichste vorgesehene Dämpferkennlinie sinnvoll ist. Die weichste vorgesehene Dämpferkennlinie kann z. B. die Dämpferkennlinie 10 sein.

Eine Grundkennlinie 62 mit "brauchbaren" Eigenschaften stellt vernünftige Notlaufeigenschaften sicher, falls die Stromversorgung nicht mehr ausreichend Energie bereitstellen kann. Möglich und bevorzugt ist auch ein mechanisch einstellbares Notventil, um einstellbare Notlaufeigenschaften zur Verfügung zu stellen.

Die Steigung ist in der Druckstufe und der Zugstufe jeweils unterschiedlich. In der Zugstufe ist die Steigung 96 hier insgesamt etwa linear. Eine Unterscheidung zwischen Low-Speed-Bereich 91 und High-Speed-Bereich 92 findet in der Zugstufe hier praktisch nicht statt.

In der Druckstufe hingegen weisen der Low-Speed-Bereich 91 und der High-Speed-Bereich 92 bei beiden eingezeichneten Dämpferkennlinien 10 und 90 hier jeweils unterschiedliche Steigungen 94 bzw. 95 auf.

Der Sensor 47 wird durch die Steuereinrichtung 46 in kurzen äquidistanten Zeitabständen von z. B. 1 ms, 2 ms oder 5 ms periodisch abgefragt. Die Steuereinrichtung 46 berechnet aus den Signalen einen Kennwert 81 für die Relativgeschwindigkeit 82. Möglich ist es, dass die Steuereinrichtung aus den Sensorsignalen eine Relativgeschwindigkeit 82 ermittelt, die als Kennwert 81 verwendet werden kann. Im einfachsten Falle ermittelt der Sensor 47 dazu direkt eine Relativgeschwindigkeit. In einem anderen einfachen Fall ermittelt der Sensor 47 oder die Steuereinrichtung 46 aus den Sensorsignalen eine Weg- oder Positionsänderung der Komponenten 101 und 102 zueinander. Wenn der Zeitabstand zweier Messungen bekannt ist, können daraus eine Relativgeschwindigkeit 82 und somit ein Kennwert 81 abgeleitet werden. Bei im Wesentlichen konstantem Zeitabstand zwischen zwei Messungen kann auch eine Positionsänderung bzw. Relativbewegung direkt als Kennwert 81 verwendet werden.

Möglich ist es auch, aus Werten von Beschleunigungssensoren oder aus einem Parameterset mehrerer unterschiedlicher Sensorwerte einen Kennwert 81 zu ermitteln, der repräsentativ für die aktuelle Relativgeschwindigkeit 82 ist. Eine Ausführung sieht vor die Daten von Beschleunigungssensoren und/oder Wegsensoren derart zu koppeln, dass einerseits auf schnelle Veränderungen durch Sprünge oder Unebenheiten der Fahrbahn schnell reagiert werden kann und dass andererseits eine exakte Positions- und Geschwindigkeitsbestimmung bei langsameren Vorgängen erreicht wird.

Mit dem so ermittelten Kennwert 81 wird mithilfe der in einer Speichereinrichtung abgelegten Dämpferkennlinie 10 oder z. B. 90 die dazugehörige Dämpfungskraft 84 bzw. 84' ermittelt. Das dazugehörige Magnetfeld und die zugehörige Stromstärke der Spule 11 werden abgeleitet und in Echtzeit eingestellt. Das bedeutet, dass ein Zyklus innerhalb 20 ms und in der Regel auch innerhalb von 10 ms abläuft. Die Messung kann häufiger erfolgen, z. B. in Zeitabständen von 5 ms oder sogar in Zeitabständen von 1 oder 2 ms oder noch schneller. Die Steuerungseinrichtung verarbeitet die aufgenommenen Sensorsignale und erzeugt mit der Spule 11 ein Magnetfeld entsprechender Feldstärke, um die zu dem Kennwert 81 zugehörige Dämpfungskraft zu erzeugen. Innerhalb der vorgesehenen Zykluszeit von z. B. 10 ms wirkt das Magnetfeld und stellt die gewünschte Dämpfungskraft 84 ein.

Wenn sich nach einer weiteren Messperiode die Relativgeschwindigkeit 82 geändert hat, wird ein dementsprechend anderes Magnetfeld erzeugt, sodass der Regelkreislauf aus Sensor 47, Steuereinrichtung 46 und Dämpfungsventil 8 als Aktor die gewünschte Reaktionszeit einhält und in Echtzeit das System anpasst.

Messungen haben ergeben, dass bei Fahrraddämpfern Reaktions- und Zyluszeiten von 10 oder 20 ms vollkommen ausreichend sind, um in Echtzeit die Dämpfung einzustellen.

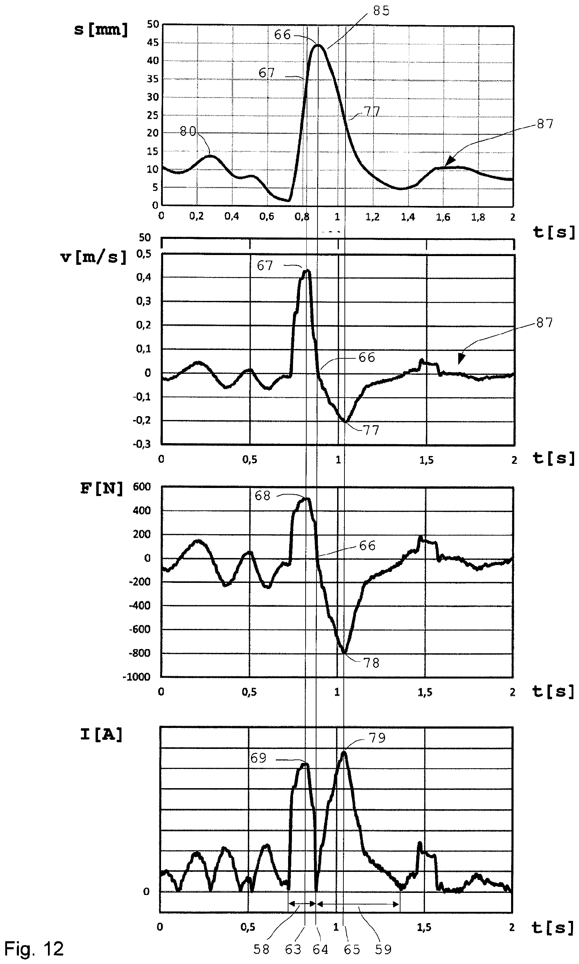

Das zeigen auch Daten eines tatsächlich gemessenen und gedämpften Sprunges, die in Fig. 12 abgebildet sind.

Fig. 12 zeigt übereinander in separaten Diagrammen über der Zeit die während eines mit einem Fahrrad ausgeführten Sprunges die Mess- und Steuerdaten.

In dem obersten Diagramm ist der Federweg in Millimetern über der Zeit in Sekunden abgebildet, wobei die Zeitskala insgesamt nur 2 Sekunden wiedergibt. Darunter sind in entsprechender Art und Weise die Relativgeschwindigkeit, die Dämpfungskraft und die Stromstärke über demselben Zeitintervall abgebildet.

Zu Beginn befindet sich der Stoßdämpfer 100 innerhalb der SAG-Position und ist etwa 12 mm eingefedert. Während des Sprunges als Ereignis 85 federt der Stoßdämpfer 100 aus, sodass der Dämpfungskolben 5 bei etwa 0,75 Sekunden nahezu vollständig ausgefedert ist.

Nach dem Aufsetzen auf dem Boden beginnt das Hinterrad einzufedern und erreicht eine maximale Einfeder- und somit Relativgeschwindigkeit 67 in der Druckstufe, die bei etwa 0,8 Sekunden auftritt und hier Werte oberhalb von 0,4 m/s erreicht. Zur gleichen Zeit wird auch die maximale Dämpfungskraft 68 von hier etwa 500 N mit dem Maximum der Stromstärke 69 in der Druckstufe erzeugt.

Sehr kurze Zeit später wird zum Zeitpunkt 64 die maximale Einfederung 66 erreicht, bei der die Relativgeschwindigkeit 67 null erreicht. Dementsprechend reduziert die Steuereinrichtung die Stromstärke auf null, sodass die Dämpfungskraft null beträgt.

Danach folgt die Zugstufendämpfung, während der Stoßdämpfer 100 wieder ausfedert. Gleichzeitig wird die Stromstärke entsprechend erhöht, um eine bei der eingestellten Dämpferkennlinie der Relativgeschwindigkeit 67 entsprechende Dämpfungskraft einzustellen.

Zum Zeitpunkt 65 ergibt sich die maximale Relativgeschwindigkeit 77 in der Zugstufe, die hier zu einer maximalen Stromstärke 79 zur Erzeugung einer maximalen Dämpfungskraft 78 von etwa 600 N führt.

Die Zeitdauer des Sprunges ergibt sich aus der Zeitdauer 58 der Druckstufe von ca. 0,2 Sekunden und der Zeitdauer 59 der Zugstufe von etwa 0,5 Sekunden zuzüglich der vorhergehenden Ausfederphase.

Aus den genanten Zeiträumen ergibt sich direkt, dass eine Regelgeschwindigkeit von 250 ms nicht ausreichend ist. Um echtzeitfähig zu sein, muss das System innerhalb von wenigstens 50 ms und besser innerhalb von 20 ms reagieren, was hier gewährleistet wird.

Die Regelgeschwindigkeit inkl. Erfassung eines Sensorsignals, Ableitung eines Kennwerts, Einstellung der Stromstärke und Einstellung der Dämpfungskraft 84 beträgt hier weniger als 10 ms. Somit wird innerhalb des in Fig. 12 abgebildeten Zeitraumes der Steuerkreislauf 12 bzw. die Regelschleife etwa 200 mal durchlaufen.

Fig. 13 zeigt einen anderen Dämpferkolben 5 für den Stoßdämpfer 100 nach Fig. 3. Dabei ist an jedem Ende des Dämpferkolbens 5 jeweils wenigstens ein Sammelraum 13 vorgesehen. Das ermöglicht es, an jedem Ende des Dämpferkolbens zusätzliche Strömungsöffnungen 14 als Strömungsventile 43 vorzusehen, die in Reihe mit einem Dämpfungskanal 20 vorgesehen sind. Möglich ist es auch, dass zwei oder mehr Dämpfungskanäle 20 und 21 vorgesehen sind.

Dadurch, dass der wenigstens ein Dämpfungskanal 20 zwischen mechanischen Strömungsöffnungen 14 oder mechanischen Strömungsventilen 43 vorgesehen ist, kann die Dämpfungskraft in der Druckstufe und in der Zugstufe unterschiedlich gewählt werden. Die Strömungsöffnungen 14 können teilweise als Durchgangsöffnungen 16 und teilweise als Einwegventil 17 ausgebildet sein. Dadurch kann in jede Strömungsrichtung unabhängig voneinander eine unterschiedliche Dämpfungskraft der Grundkennlinie 62 vorgegeben werden.

Die insbesondere als Einwegventile 17 ausgebildeten Strömungsventile 43 können über Einstellmittel 44 wie z. B. Schrauben oder Drehelemente einstellbar sein, um den Durchflusswiderstand richtungsabhängig einzustellen. Beispielsweise kann an jedem Ende ein Drehring als Einstellmittel 44 vorgesehen sein, der je nach Drehwinkel eine, zwei oder mehr der über dem Umfang vorgesehenen Strömungsöffnungen teilweise oder ganz verschließt, sodass der in die eine oder andere Strömungsrichtung 22 oder 23 zur Verfügung stehende maximale Strömungsquerschnitt jeweils entsprechend einstellbar ist.

Dadurch ist die Grundkennlinie 62 des Stoßdämpfers 100 in der Zugstufe und in der Druckstufe beliebig anpassbar. Beispielsweise kann eine Anpassung der Grundkennlinie 62 des Stoßdämpfers 100 an den Rahmentyp vorgesehen sein. Abhängig von der Rahmengeometrie und der Rahmengröße und der Einbaulage kann eine Vorjustage erfolgen, sodass eine Grundanpassung der Grundkennlinie 62 an die Einbaubedingungen erfolgen kann.

Die Grundkennlinie 62 wird dann vorzugsweise für die vorgesehene Einbausituation so eingestellt, dass sie etwa der Dämpferkennlinie 10 mit der weichsten vorgesehen Dämpfung entspricht. Wenn nur eine weiche Dämpfung gewünscht oder eingestellt wird, so wird überhaupt keine elektrische Energie benötigt. Die elektrische Spule muss nur zu den Zeitpunkten mit Strom beaufschlagt werden, wenn eine stärkere Dämpfung benötigt wird. Durch diese Maßnahme kann der Strombedarf nochmals erheblich gesenkt werden.

In allen Betriebsarten des Stoßdämpfers 100 wird vorzugsweise als Sensoreinrichtung 47 wenigstens ein Wegsensor eingesetzt. Die Sensoreinrichtung 47 wird z. B. vorzugsweise mit einer Frequenz von 2 kHz und einer Auflösung von 12 Bit ausgelesen. Theoretisch kann so bei einem Hub eines Hinterraddämpfers 115 von 50 mm alle 0,5 ms die Relativbewegung auf 12 um genau bestimmt werden. Eine Federgabel 114 weist im Unterschied dazu z. B. einen Hub von 150 mm auf, wodurch sich bei gleichen Bedingungen eine Relativbewegung auf 36 um genau bestimmt werden kann.

Die mit der Sensoreinrichtung 47 erfassten Daten durchlaufen vorzugsweise einen Tiefpass-Filter und werden zur Berechnung der Geschwindigkeit verwendet, wobei anhand der momentanen Geschwindigkeit, Richtung und der voreingestellten Dämpferkennlinie eine bestimmte Dämpfungskraft berechnet wird. Dieser Berechnungsvorgang wird z. B. mit 500 Hz wiederholt, sodass alle 2 ms eine neue Kraftvorgabe generiert wird. Aus der Dämpfungskraft wird über den bekannten Zusammenhang von Dämpfungskraft und dazu nötiger Feldstärke und wiederum dazu nötiger Stromstärke ein einzustellender Strom ermittelt. Insbesondere stellt ein eigener Stromregler anhand dieser Kraftvorgabe den entsprechenden Strom an der elektrischen Spuleneinrichtung am Stoßdämpfer ein, sodass die resultierende Dämpfungskraft ausreichend schnell nachgeführt wird und im Wesentlichen der Vorgabe entspricht.

Die Umwandlung einer analog gemessenen Relativbewegung in ein digitales Signal und die anschließende Berechnung der Stromvorgabe bzw. des einzustellenden Stroms benötigt kaum Ressourcen und ist mit einem Mikrocontroller nach dem Stand der Technik in wenigen Mikrosekunden möglich. Der Stromregler sorgt für ein ausreichend schnelles Ansprechen der elektrischen Spuleneinrichtung, sodass trotz Induktivität und Wirbelströmen ein Stromsprung von 0 auf 100% in wenigen Millisekunden möglich ist.

Vorteilhaft für das Ansprechverhalten des Stromreglers sind der Tiefpass-Filter und die Berechnung der Relativgeschwindigkeit, wobei hier ein Kompromiss aus schnellem Ansprechen und Filterwirkung gefunden werden muss. Die Filterparameter können auch dynamisch an die jeweilige Situation angepasst werden.

Bei entsprechend schneller Filterung wird im ungünstigsten Falle eine Relativbewegung bzw. eine Positionsänderung beim nächsten Reglertakt nach 2 ms erkannt und wird dann innerhalb von wenigen Mikrosekunden verarbeitet. Der Stromregler wird praktisch sofort daran arbeiten, die neue Stromvorgabe umzusetzen. Die Dämpfungskraft wirkt etwas verzögert nach der Stromvorgabe. Die Ansprechzeit des magnetorheologischen Fluids (MRF) beträgt kleiner als 1 ms. Die Steifigkeit des Systems spielt auch eine geringe Rolle. Abhängig vom konkreten Aufbau wird der neue Sollwert der Dämpfungskraft innerhalb von wenigen Millisekunden erreicht. Sprungantwortzeiten von weniger als 10ms sind mit dem System einfach machbar und wurden schon erfolgreich nachgewiesen. Je nach Anforderungen und verfügbaren Herstellkosten sind auch schnellere Komponenten einsetzbar, welche Sprungantwortzeiten im Bereich von einstelligen Millisekunden ermöglichen.

Die Regelung kann auch auf Fuzzy Logik aufgebaut und/oder lernfähig sein.

Es können auch zwei oder mehrere Dämpfer elektrisch zu einem Gesamtsystem verknüpft werden. Hierbei werden z. B. relevante Daten vom einem ersten Dämpfer an einen zweiten Dämpfer in Echtzeit weitergegeben, wodurch sich dieser besser auf das Ereignis einstellen kann. Als Beispiel kann der Dämpfer in der Federgabel die Informationen an den Hinterraddämpfer weitergeben, wodurch sich dieser z. B. auf einen starken Schlag voreinstellen kann. Das Gesamtsystem wird so effektiver. Es ist auch/oder eine hydraulische Verknüpfung von zwei oder mehreren Dämpfern möglich (offenes oder geschlossenes hydraulisches System).

Die Dämpfereinrichtung kann zwei oder mehrere steuerbare Dämpfungsventile mit einer (oder mehreren) Felderzeugungseinrichtung umfassen. Diese können auch außerhalb der sich relativ zueinander beweglichen Komponenten angebracht sein. Möglich ist es auch, dass wenigstens ein Permanentmagnet vorgesehen, der ein statisches Magnetfeld erzeugt. Die Stärke des effektiv in dem Dämpfungsventil wirkenden Magnetfeldes kann dann durch das von der elektrischen Spule als Felderzeugungseinrichtung erzeugte Magnetfeld in Echtzeit moduliert werden.

Insgesamt stellt die Erfindung einen vorteilhaften Stoßdämpfer zur Verfügung, welcher sowohl als Hinterradstoßdämpfer als auch in einer Federgabel Anwendung finden kann. Es wird auf einfache Art und Weise eine unterschiedliche Grunddämpfung in der Druck- und/oder Zugstufe ermöglicht. Die Unterschiedlichkeit hängt von der Orientierung der Einwegventile in den Strömungsöffnungen ab. Dadurch kann eine flexible und weitgehende Anpassung an unterschiedlichste Bedürfnisse gewährleistet werden. Die Steuerung erfolgt in Echtzeit, sodass auf alle auftretenden Ereignisse, Störungen, Stöße oder Hindernisse sofort und unmittelbar reagiert wird.

**Bezugszeichenliste:**

| | | | |
|---|---|---|---|
| 1 | Dämpfereinrichtung | 37 | Federungskolben |
| 2 | Dämpfergehäuse | 38 | Kabel |
| 3 | erste Dämpferkammer | 39 | Endlage |
| 4 | zweite Dämpferkammer | 40 | Dämpfungskolbeneinheit |
| 5 | Dämpfungskolben | 41 | Kern |
| 6 | Kolbenstange | 42 | Isoliermaterial |
| 7 | Strömungskanal | 43 | Strömungsventil |
| 8 | Dämpfungsventil | 44 | Einstellmittel |
| 9 | feldempfindliches Medium | 45 | Speichereinrichtung |
| 10 | Dämpferkennlinie | 46 | Steuereinrichtung |
| 11 | Felderzeugungseinrichtung, Spule | 47 | Sensor |
| | | 48 | Bedieneinrichtung |
| 12 | Steuerkreislauf | 49 | Anzeige |
| 13 | Sammelraum | 50 | Elektronikeinheit |
| 14 | Strömungsöffnung | 51 | Bedienknopf |
| 15 | Strömungsöffnung | 52 | Schritt |
| 16 | Durchgangsöffnung | 53 | Internet |
| 17 | Einwegventil | 54 | Netzwerkschnittstelle |
| 18 | Ventilöffnung | 55 | Funknetzschnittstelle |
| 19 | Fächerwandung | 56 | Schritt |
| 20 | Dämpfungskanal | 57 | grafische Bedieneinheit |
| 21 | Dämpfungskanal | 58 | Zeitdauer Druckstufe |
| 22 | eine Strömungsseite | 59 | Zeitdauer Zugstufe |
| 23 | andere Strömungsseite | 60 | Steuerungseinrichtung |
| 24 | Strömungsrichtung | 61 | Batterieeinheit |
| 25 | Einlauf | 62 | Grundkennlinie |
| 26 | Federeinrichtung | 63 | Zeitpunkt |
| 27 | erste Federkammer | 64 | Zeitpunkt |
| 28 | zweite Federkammer | 65 | Zeitpunkt |
| 29 | Wandstärke | 66 | max. Einfederung |
| 30 | freie Erstreckung | 67 | max. Relativgeschwindigkeit |
| 31 | Länge | | |
| 32 | Breite | 68 | max. Dämpfungskraft |
| 33 | Querschnittsfläche | 69 | max. Stromstärke |
| 34 | Querschnittsfläche | 70 | Schritt |
| 35 | Querschnittsfläche | 71 | Ausgleichsraum |
| 36 | Ringleiter | 72 | Ausgleichskolben |
| 73 | Halter | | |
| 74 | Magnet | | |
| 75 | Stößel | | |
| 77 | max. Relativgeschwindigkeit | | |
| 78 | max. Dämpfungskraft | | |
| 79 | max. Stromstärke | | |
| 80 | Relativbewegung | | |
| 81 | Kennwert | | |
| 82 | Relativgeschwindigkeit | | |
| 83 | einzustellende Feldstärke | | |
| 84 | Dämpfungskraft | | |
| 85 | Ereignis | | |
| 86 | Relativposition | | |
| 87 | Zeitabstand | | |
| 90 | Dämpferkennlinie | | |
| 91 | Low-Speed-Bereich | | |
| 92 | High-Speed-Bereich | | |
| 93 | Übergangsbereich | | |
| 94 | Steigung | | |
| 95 | Steigung | | |
| 96 | Knickpunkt | | |
| 97 | Pfeil | | |
| 98 | Steigung | | |
| 99 | Steigung | | |
| 100 | Stoßdämpfer | | |
| 101 | Komponente erstes Ende | | |
| 102 | Komponente zweites Ende | | |
| 111 | Vorderrad | | |
| 112 | Hinterrad | | |
| 113 | Rahmen | | |
| 114 | Federgabel | | |
| 115 | Hinterraddämpfer | | |
| 116 | Lenker | | |
| 117 | Sattel | | |
| 200 | Fahrrad | | |

## Patentansprüche

1. Stoßdämpfer (100) für ein wenigstens teilweise muskelbetriebenes Fahrrad (200), wobei wenigstens eine Dämpfereinrichtung (1) vorgesehen ist, die zur Dämpfung einer Relativbewegung zwischen einer ersten und einer zweiten Komponente (101, 102) dient, wobei eine Steuereinrichtung (46), eine Speichereinrichtung (45) und wenigstens eine Sensoreinrichtung (47) vorgesehen sind,
wobei die Dämpfereinrichtung (1) wenigstens ein steuerbares Dämpfungsventil (8) mit wenigstens einer Felderzeugungseinrichtung (11) umfasst, mit der ein feldempfindliches Medium (9) beeinflussbar ist, um eine Dämpfungskraft (84) der Dämpfereinrichtung (1) durch Erzeugen einer Feldstärke (12) der Felderzeugungseinrichtung (11) zu beeinflussen,
**dadurch gekennzeichnet,**
**dass** die Steuereinrichtung (46) und die Sensoreinrichtung (47) dazu ausgebildet sind, zur Ereigniserkennung wenigstens einen Kennwert (91) für eine Relativgeschwindigkeit (92) der ersten und der zweiten Komponente (101, 102) zueinander periodisch in Echtzeit zu ermitteln,
und **dass** die Steuereinrichtung (46) dazu ausgebildet ist, mit dem Kennwert (81) aus einer in der Speichereinrichtung (45) abgelegten Dämpferkennlinie (10, 90) ein Maß für eine aktuelle einzustellende Feldstärke (83) in Echtzeit abzuleiten,
und **dass** die Steuereinrichtung (46) und die Felderzeugungseinrichtung (11) dazu ausgebildet sind, in Echtzeit die aktuelle einzustellende Feldstärke (83) einzustellen, um eine Dämpfungskraft (84) in Echtzeit einzustellen, die sich aus der vorbestimmten Dämpferkennlinie (10, 90) bei dem ermittelten Kennwert (81) ergibt.

2. Stoßdämpfer (100) nach dem vorhergehenden Anspruch, wobei wenigstens ein mechanisches Ventil (17) als mechanisches Einwegventil (17) ausgebildet ist und/oder wobei wenigstens zwei unterschiedliche mechanische Ventile (15, 16) parallel geschaltet sind.

3. Stoßdämpfer (100) nach einem der beiden vorhergehenden Ansprüche, wobei dessen Felderzeugungseinrichtung ohne Ereignis stromlos ist und erst beim Eintreten eines Ereignisses elektrische Energie für die Dämpfung benötigt.

## Claims

1. A shock absorber (100) for an at least partially muscle-powered bicycle (200), wherein at least one damper device (1) is provided which serves for damping a relative motion between a first and a second component (101, 102), wherein a control device (46), a memory device (45) and at least one sensor device (47) are provided,
wherein the damper device (1) comprises at least one controllable damping valve (8) having at least one field generating device (11) with which a field-sensitive medium (9) can be influenced for influencing a damping force (84) of the damper device (1) by generating a field intensity of the field generating device (11),
**characterized in**
**that** the control device (46) and the sensor device (47) are configured to periodically obtain in real time at least one parameter (91) for relative speeds (92) of the first and second components (101, 102) relative to one another for event recognition,
and **that** the control device (46) is configured for deriving in real time a field intensity (83) measure to be currently set by way of the parameter (81) from a characteristic damper curve (10, 90) stored in the memory device (45),
and **that** the control device (46) and the field generating device (11) are configured to set the field intensity (83) to be currently set in real time for setting in real time a damping force (84) resulting from the predetermined characteristic damper curve (10, 90) at the parameter (81) obtained.

2. The shock absorber (100) according to the preceding claim,
wherein at least one mechanical valve (17) is configured as the mechanical one-way valve (17), and/or wherein at least two different mechanical valves (15, 16) are connected in parallel.

3. The shock absorber (100) according to any of the two preceding claims, wherein its field generating device is currentless in the absence of an event and does not require electric energy for damping until an event occurs.

## Revendications

1. Amortisseur de chocs (100) pour une bicyclette (200) entraînée au moins en partie par force musculaire, dans lequel au moins un dispositif amortisseur (1) est prévu, qui sert à amortir un mouvement relatif entre un premier et un deuxième composant (101, 102), dans lequel un dispositif de commande (46), un dispositif de stockage (45) et au moins un dispositif capteur (47) sont prévus,
dans lequel le dispositif amortisseur (1) comprend au moins une soupape d'amortissement réglable (8) ayant au moins un dispositif de génération de champ (11) au moyen duquel un milieu sensible au champ (9) peut être Influencé afin d'influer sur une force d'amortissement (84) du dispositif amortisseur (1) en générant une intensité de champ (12) du dispositif de génération de champ (11), **caractérisé par le fait**
**que** le dispositif de commande (46) et le dispositif capteur (47) sont conçus pour déterminer périodiquement en temps réel au moins une valeur caractéristique (91) pour une vitesse relative (92) des premier et deuxième composants (101, 102) l'un par rapport l'autre pour la reconnaissance d'événement,
et **que** le dispositif de commande (46) est conçu pour dériver en temps réel une mesure pour une intensité de champ (83) actuelle à régler, en utilisant la valeur caractéristique (81), à partir d'une courbe caractéristique d'amortissement (10, 90) stockée dans le dispositif de stockage (45),
et **que** le dispositif de commande (46) et le dispositif de génération de champ (11) sont conçus pour régler en temps réel l'intensité de champ (83) actuelle à régler afin de régler en temps réel une force d'amortissement (84) qui résulte de la courbe caractéristique d'amortissement prédéterminée (10, 90) dans la valeur caractéristique (81) déterminée.

2. Amortisseur de chocs (100) selon la revendication précédente, dans lequel au moins une soupape mécanique (17) est conçue en tant que soupape unidirectionnelle mécanique (17) et/ou dans lequel au moins deux soupapes mécaniques différentes (15, 16) sont connectées en parallèle.

3. Amortisseur de chocs (100) selon l'une quelconque des deux revendications précédentes, dans lequel son dispositif de génération de champ est sans courant sans événement et n'a besoin d'énergie électrique pour l'amortissement que lorsqu'un événement se produit.
